# EUROPEAN PATENT SPECIFICATION

(11) **EP 3 758 561 B1**
(45) Date of publication and mention of the grant of the patent: **30.04.2025**
(21) Application number: 19756877.7
(22) Date of filing: 25.02.2019
(51) Int. Cl.: A47H 13/00, A47H 15/00, F16B 5/00, F16B 45/00

(54) **MOUNTING STRIP**
MONTAGELEISTE
BANDE DE MONTAGE

(30) Priority: 26.02.2018 US 201862634939 P
(43) Date of publication of application: 06.01.2021
(73) Proprietor: SLIDE2SEAL LTD., 1381500 Kerem Ben Zimra (IL)
(72) Inventor: NIR, Yoram, 1210500 Yesud Hamaala (IL); SHAY, Eyal, 1385500 Yiron (IL)
(74) Representative: Colombo, Stefano Paolo
(86) International application number: PCT/IL2019/050212
(87) International publication number: WO 2019/162947

(56) References cited:
- DE-B- 1 259 053
- FR-A1- 2 775 310
- JP-B1- 4 081 779
- US-A- 5 291 632
- US-A1- 2002 153 463
- US-A1- 2017 208 981
- US-A1- 2017 208 981

## Description

### TECHNOLOGICAL FIELD

The presently disclosed subject matter relates to mounting arrangements for sheet elements, in particular for enabling the mounting of sheet elements to a structure.

### BACKGROUND ART

References considered to be relevant as background to the presently disclosed subject matter are listed below:
- GB 201313348
- GB 2481234
- US 5,291,632 discloses a hanger device for hanging a curtain to a curtain rod via a curtain runner reciprocally mounted on the curtain rod. The hanger device comprises a hanger body attached to the curtain and a hook portion pivotally mounted on the hanger body and adapted for hooking engagement with a curtain runner. When the hook portion is angularly moved to an inclined position, the hook portion is locked to the hanger body against unnecessary oscillation, so that the hook portion is quite immune from be entangled with the curtain during laundering of the curtain..
- US 2017/208981 discloses a number of mounting systems for mounting a sheet element with respect to a rail element.

Acknowledgement of the above references herein is not to be inferred as meaning that these are in any way relevant to the patentability of the presently disclosed subject matter.

### BACKGROUND

There are a variety of structures in which a flexible panel, for example made from a fabric or net, is required to be secured to the structure via ropes, cables, elasticated straps and the like. Such panels can include curtains, truck cargo container openings, banners, building facades, building wraps, shade nets, protective nets and the like, for example. Conventionally, such flexible panels are provided with eyelets, grommets or other connectors, which are first manufactured and then affixed to the panels, along one or more edges of the panels. The ropes, cables, elasticated straps or the like can be looped directly through the eyelets/grommets/connectors, or indirectly via rings that are in turn looped through the eyelets/grommets. Some examples of grommets or connectors sometimes used with nets include the "net connector with bridge", model 8200 or the "net connector" model 8100, 8100bh, both provided by Paskal, Israel, and the "Folienplakette WIESEL Universal PA SET; 8Stk", model F50010SET, provided by Fruit Security Austria.

By way of general background, GB 201313348 describes a curtain lining kit, curtain assembly and method for retrofitting or adding a lining to a separate eyelet curtain. The method involves attaching a plurality of curtain hooks to curtain tape attached to a sheet of lining material and attaching the hooks to curtain rings which have been arranged between the eyelets of an eyelet curtain on a curtain pole. The assembly disclosed comprises a curtain pole, an eyelet curtain mounted on the pole, a lining with attached curtain tape and hooks arranged on the pole through curtain rings which are disposed between the eyelets such that when viewed the curtain rings and lining are not significantly visible.

Also by way of general background, GB 2481234 discloses a curtain lining kit for adding a lining to a separate eyelet curtain mountable upon a curtain rod without attaching the lining to the eyelet curtain comprises at least one sheet of lining material having a curtain tape attached along and adjacent an upper edge thereof. The kit can further include a plurality of hooks attachable to the curtain tape and a plurality of curtain rings each attachable to a respective one of the curtain hooks. In another embodiment, the at least one sheet of lining material is provided with pairs of adjacent eyelets through which a curtain rod is passed in use. In use, the drop of the first sheet of lining material is less than the drop of the eyelet curtain with which the lining is to be used. The curtain lining kit allows an eyelet curtain to be retrofitted with a lining.

### GENERAL DESCRIPTION

The invention is a structure according to claim 1 and a method of providing a structure according to claim 12. According to a first aspect of the presently disclosed subject matter there is provided a mounting strip comprising a strip element and a plurality of engagement elements, each said engagement element including: an anchor portion configured for anchoring the respective engagement element to the strip element; and an engagement portion including a through-opening; wherein at least the anchor portion is provided as an injection molded article, directly molded onto said strip element.

For example, the mounting strip is for use with a panel element, the panel element being different from the panel element.

For example, the mounting strip can comprise an elongate configuration having a longitudinal dimension at least twice a width dimension thereof.

In at least some examples, the mounting strip is configured for affixing the mounting strip with respect to a panel element. Thus at least in such examples the mounting strip is different from the panel element, and optionally the width of the mounting strip is significantly less than the width of the panel element. In other examples the mounting strip is configured as a multi-purpose belt or strap, for facilitating mounting multiple items thereto, for example.

For example, each said engagement element can be provided as an injection molded article, directly molded onto said strip element.

Each engagement portion can be detachably attachable to a respective one of the anchor portions.

The anchor portion can comprise a body interface and the engagement element can comprise an engagement portion interface configured to interface with and be connected to the body interface.

The interfacing can be via any one or more of a screw and thread arrangement, an adhesive connection between a protrusion and a recess or a snap-fit arrangement.

The strip element can comprise a plurality of holes at spaced apart locations along the strip element; wherein the anchor portions can each be formed superposed at one of the plurality of holes, having a first anchor portion and second anchor portion arranged above and below the strip element respectively, such that the first and second anchor portions are connected to one another via a connected portion passing through one of the holes.

The mounting strip can comprise at least one cordelle at an edge of the strip element, and a slot in each of the anchor portions. The slot can comprise a circular portion arranged to engage with the cordelle.

Additionally or alternatively, for example, said through opening can define a passage axis different from a longitudinal axis of the anchor portion. For example, said passage axis can be substantially parallel to said longitudinal axis, or said passage axis can be substantially orthogonal to said longitudinal axis, or said passage axis can be at an acute angle to said longitudinal axis.

The engagement portion can include a loop structure defining said through-opening therein.

The loop structure can be in the form of a body of material at least partially circumscribing and thereby defining the through-opening.

The body of material can comprise at least one partial ring-shaped structure having an opening in the ring structure. The opening can be a gap either at a central portion of the ring distal from the anchoring portion, or at a side portion of the ring between the central portion and the anchoring portion.

The relative sizes of the gap and the through-opening can be such as to allow the loop-structure to engage with a cable passing through the through-opening, and to allow the loop-structure to become disconnected from the cable via the gap under loads above a pre-determined threshold.

A transverse cross-sectional area of the through-opening can be configured to be larger than a transverse cross-sectional area of a connection element configured to be passed therethrough.

The loop structure can be in the form of a body of material fully circumscribing and defining the through-opening. A first part of the loop structure can be defined by the base element, while a second part of the loop structure can be defined by a C-shaped element joined to the base element. The through-opening can be configured to allow passage of a connection element through the loop structure along a passage axis.

In at least some examples, the engagement elements can be arranged on a first edge portion of the strip element.

The mounting strip can comprise two layers joined together at the first edge portion and which, when not connected to a panel, can be separated at a second edge portion of the strip element.

The engagement elements can be a first set of engagement elements, and the mounting strip can comprising a second set of engagement elements arranged on a second edge portion of the strip element, the second edge portion being located at an edge of the strip opposite from that at which the first edge portion is located.

According to a second aspect of the presently disclosed subject matter there is provided a mounting strip comprising a strip element and a plurality of engagement elements, each said engagement element including: an anchor portion configured for anchoring the respective engagement element to the strip element; wherein at least the anchor portion is provided as an injection molded article, directly molded onto said strip element; and wherein, in use, the anchor portion is configured to interface with an engagement portion.

The mounting strip can include an engagement portion provided for each anchor portion, each engagement element comprising the anchor portion and the engagement portion. Each engagement portion can comprise a through-opening.

According to a third aspect of the presently disclosed subject matter there is provided an assembly including a panel element and at least one mounting strip, wherein the least one mounting strip is affixed with respect to the panel element, the mounting strip being as defined according to the first or second aspect of the presently disclosed subject matter.

The mounting strip can be affixed at a second edge portion thereof to the panel element.

The mounting strip can comprise a central portion free of said engagement elements. The mounting strip can be affixed at the central portion thereof to the panel element.

The mounting strip is affixed to an edge of the panel element, or to a portion of the panel element spaced from an edge thereof.

The mounting strip can be affixed to an edge of the panel element, the edge of the panel element being affixed in-between the two layers of the mounting strip at the second edge portion thereof.

Affixing can comprises at least one of sewing, stapling, welding, melting or adhering.

The panel element can comprising at least one further mounting strip affixed thereto.

According to a fourth aspect of the presently disclosed subject matter, there is provided a method for providing a plurality of engagement elements on a strip element, the engagement elements each comprising an anchor portion configured for anchoring the respective engagement element to the strip element; and an engagement portion including a through-opening, the method comprising: injection molding a plurality of anchor portions spaced apart along an edge of the strip element; and providing an engagement portion for each anchor portion.

The method may comprise at least one of injection molding, interfacing or connecting, each of the engagement portions to a respective one of the anchor portions.

The engagement and anchor portions may be formed in a single step by injection molding.

The method may comprise: providing a plurality of holes at spaced apart locations along the strip element; and forming each of the anchor portions superposed at one of the holes, having a first anchor portion and second anchor portion arranged above and below the strip element respectively, such that the first and second anchor portions are connected to one another via a connected portion passing through one of the holes.

The method may comprise: providing a cordelle at an edge of the strip element, and a slot in each of the anchor portions, the slot comprising a circular portion arranged to engage with the cordelle.

According to a fifth aspect of the presently disclosed subject matter, there is provided a method for fixing a mounting strip to an edge of a panel element, or to a portion of a panel element spaced from an edge thereof, comprising: providing a mounting strip as defined in the first or second aspect, the method comprising affixing the mounting strip to a panel element.

Affixing can comprise at least one of sewing, stapling, welding, melting or adhering.

Affixing can comprise affixing an edge of the mounting strip, or a central portion of the mounting strip, to an edge of a panel element, or to a portion of a panel element spaced from an edge thereof.

According to a sixth aspect of the presently disclosed subject matter, there is provided a structure comprising: an assembly as defined in the third aspect; a plurality of mounting points; and at least one connection element; wherein the engagement portions of the engagement elements of the assembly are connected to the plurality of mounting points by the at least one connection element.

The at least one connection element can comprise a cord element threaded in an alternating fashion between the mounting points and the loop structures of the engagement portions.

The at least one connection element can comprise a plurality of hooks, each arranged to connect one of the loop structures of the engagement portions to one of the mounting points.

According to a seventh aspect of the presently disclosed subject matter, there is provided a mounting strip comprising a strip element and a plurality of engagement elements, each said engagement element including:
an anchor portion configured for anchoring the respective engagement element to the strip element; and
an engagement portion including a through-opening;
wherein at least the anchor portion is provided as an injection molded article, directly molded onto said strip element
and wherein the mounting strip is the form of a panel element

### BRIEF DESCRIPTION OF THE DRAWINGS

In order to better understand the subject matter that is disclosed herein and to exemplify how it may be carried out in practice, embodiments will now be described, by way of non-limiting example only, with reference to the accompanying drawings, in which:
**Fig. 1** is a top partially cutout view of a mounting system and mounting strip according to a first example of the presently disclosed subject matter;
**Fig. 1(a)** is a transverse cross-sectional view of a strip member of the mounting strip of the example of Fig. 1;
**Fig. 1(b)** is a transverse cross-sectional view of the mounting strip corresponding to the example of Fig. 1(a);
**Fig. 2(a)** is a transverse cross-sectional view of a strip member of the mounting strip according to an alternative example to that of Fig. 1(a);
**Fig. 2(b)** is a transverse cross-sectional view of the mounting strip corresponding to the example of Fig. 2(b);
**Figs. 3(a), 3(b), 3(c), 3(d)** show in isometric view, top view, side view, and cross-sectional side view along the plane A-A in Fig. 3(b), respectively, an engagement element according to a first example of the presently disclosed subject matter;
**Figs. 4(a), 4(b), 4(c), 4(d)** show in isometric view, top view, side view, and front view, respectively, an engagement element according to an alternative variation of the example of Figs.3(a), 3(b), 3(c), 3(d);
**Fig. 5** schematically illustrates an implementation of the examples of Figs. 1 to 4(d);
**Fig. 6** schematically illustrates another implementation of the examples of Figs. 1 to 4(d);
**Figs. 7(a), 7(b), 7(c), 7(d)** show in isometric view, top view, side view, and front view, respectively, an engagement element according to an alternative variation of the example of Figs. 4(a), 4(b), 4(c), 4(d);
**Figs. 8(a), 8(b), 8(c), 8(d)** show in isometric view, top view, side view, and front view, respectively, an engagement element according to another alternative variation of the example of Figs. 4(a), 4(b), 4(c), 4(d);
**Figs. 9(a), 9(b), 9(c), 9(d)** show in isometric view, top view, side view, and front view, respectively, an engagement element according to another alternative variation of the example of Figs. 4(a), 4(b), 4(c), 4(d);
**Fig. 9(e)** shows in isometric view, an engagement element according to another alternative variation of the example of Figs. 9(a), 9(b), 9(c), 9(d);
**Figs. 10(a), 10(b), 10(c)** show in isometric view, side view and top view, respectively, an engagement element according to an alternative variation of the example of Figs. 4(a), 4(b), 4(c), 4(d);
**Fig. 10(d)** shows in isometric view, an engagement element according to another alternative variation of the example of Figs. 10(a), 10(b), 10(c);
**Figs. 11(a)****,** **11 (b), 11 (c), 11(d)** show in isometric views, various options for an engagement element according to another alternative variation of the example of Figs. 4(a), 4(b), 4(c), 4(d);
**Fig. 12** is a transverse cross-sectional view of a strip member of the mounting strip of the example of Fig. 1 in alternative mounting arrangement with respect to a panel;
**Fig. 13** is a transverse cross-sectional view of a strip member of the mounting strip of an alternative variation of the example of Fig. 1; and
**Fig. 14** is a transverse cross-sectional view of a strip member of the mounting strip of the example of Fig. 13 in mounting arrangement with respect to a panel according to one example.

### DETAILED DESCRIPTION

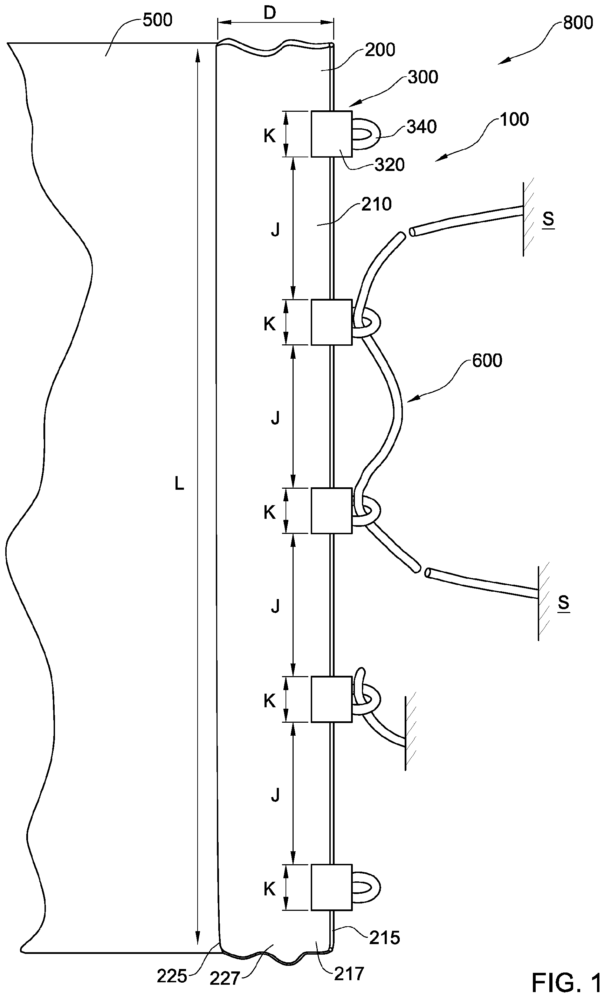

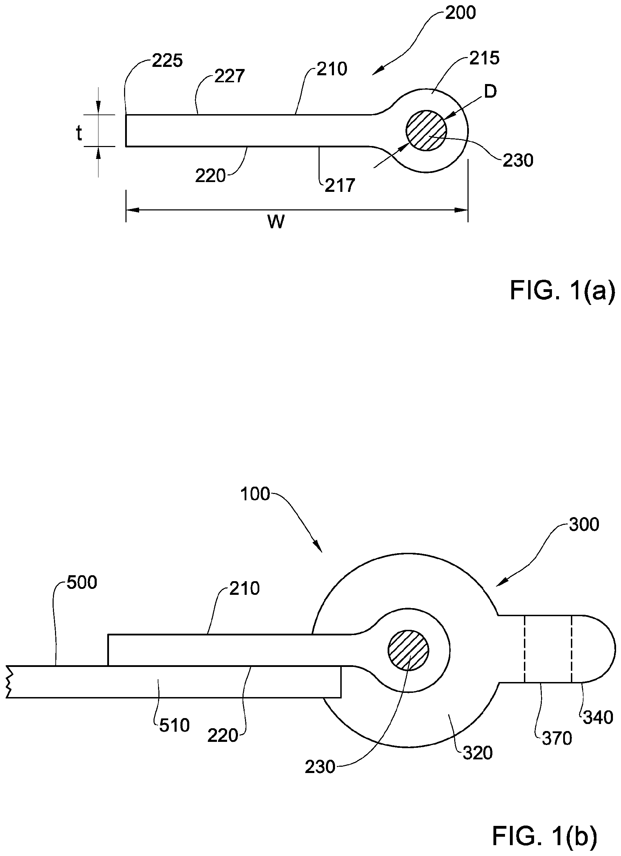

Referring to Fig. 1, a mounting strip (also referred to interchangeably herein as a strip, or as a compound strip, or as a mounting tape, or as a compound tape, or as a tape) according to a first example of the presently disclosed subject matter, generally designated **100,** comprises a strip element **200** (also referred to interchangeably herein as a "tape element" and a "strip member") and a plurality of engagement elements **300.**

In at least some examples, the mounting strip **100** is configured for mounting the mounting strip to a sheet element or panel **500,** and for thereby enabling the panel element **500** to be secured to a structure **S** or the like, optionally including another panel **500,** via a connection element **600** to provide an assembly. A mounting system **800** is thereby provided comprising at least one sheet element **500** comprising at least one mounting strip **100,** and at least one connection element **600.**

The provision of a mounting strip **300** separate from the panel element **500** can lead to facilitating the affixing of the engagement elements **300** indirectly to the panel element **500** by means of the ready-to-use mounting strip **100** to form a respective assembly,

Herein, "sheet", "sheet element", "panel" and "panel element" are used interchangeably. The panel **500** is made from any suitable or desired flexible sheet material, and can include, for example, sheets that are essentially continuous (and do not have any grids or through-holes), or for example that are essentially non-continuous, i.e., in the form of a mesh or net (and thus have grids of through-holes, each having an open area, and the ratio of the open area to the closed area (provided by the actual material of the panel) can be 1, or less than 1, or greater than 1).

The panel can be for use, for example, as the whole or part of a curtain, truck cargo container opening, banner, building facade, building wrap, shade net, protective net and the like.

For example, the sheets can be made from fabric or textile comprising natural and/or synthetic yarns, for example nylon, polyester, acrylic or other synthetic yarns, plastic material, for example PVC, Polyethylene or Polyurethane, canvas, technical yarns such as Kevlar^{®}, Technora^{®}, Nomex^{®}, Dyneema^{®} and Vectran^{®}, and so on, wherein the fabric can optionally be coated with a suitable coating, such as waterproof, stiffening or other coatings for example. The fabric is optionally capable of being rolled into a compact spiral configuration, for example with respect to a roll axis aligned with a width direction of the panel, and for being unrolled into at least a flat configuration. In at least some examples, the panel **500** is made from a flexible material that is not elastically stretchable, or is only mildly stretchable, or substantially stretchable, at least when subjected to regular loads, i.e., the loads for which the panel **500** is rated during regular use thereof. While the panel **500** can have any suitable shape, in this and other examples the panel **500** has a nominally rectangular shape, having a longitudinal dimension (parallel to a longitudinal dimension of the mounting strip **100)** that is larger than a width dimension of the panel **500,** and the longitudinal dimension and the width dimension of the panel **500** are each significantly greater than a thickness or depth dimension thereof. In alternative variations of this example, the width dimension can be the same size or larger than the longitudinal dimension.

In at least this example, the connection element **600** is in the form of a cord element, comprising a suitable length of flexible material than can be looped, or entwined, with the engagement elements **300** and where desired transfer mechanical loads (static loads and/or dynamic loads) between the panel **500** and the structure. Thus, in at least this example, the engagement elements **300** are in the form of cord-engaging elements.

Herein "cord element", "cord", "cable element", "cable", "string element", "string", "rope element" and "rope" are used interchangeably. In general the connection element **600** in the form of a cord element that can carry and transfer tensile loads but not compressive loads. To this end, the cord element can be, for example, in the form of an elasticated bungee or in the form of a cable. Alternatively, the connection element **600** can be in the form of a pole, or a hook, for example, and can carry loads in tension and/or in compression.

In at least this example, and referring to Figs. 1, 1(a) and 1(b), the strip element **200** is generally elongate, having a (longitudinal) length dimension **L,** width dimension **D** and thickness dimension **t.** In at least some applications of this and other examples, the length dimension **L** is so-called "endless"; in other words the strip element **200** of a desired length dimension **L** can be cut or otherwise separated from a roll (or reel or other packaging arrangement) of strip element in which the longitudinal length of the strip element can be much greater than the desired length. Thus, for at least this example, the length dimension **L** for a particular strip element **200** can be varied to suit a particular application, while the width **D** and thickness **t** dimensions are maintained constant. Of course, it is also alternatively possible to provide strip elements **200** of many different combinations of length dimension, width dimension and thickness dimension, each having any desired length dimension **L** and/or any desired width dimension **D** and/or any desired thickness dimension **t.**

The strip element **200** comprises an upper surface **210** and lower surface **220,** separated by the thickness dimension **t.** The strip element **200** comprises a longitudinal first edge portion **217** including longitudinal first edge **215,** running along a direction parallel to the length dimension **L.** The strip element **200** comprises also comprises a longitudinal second edge portion **227** including longitudinal second edge **225,** running along a direction parallel to the length dimension **L.** The longitudinal first edge **215** is spaced from the longitudinal second edge **225** by the width dimension **W.**

The strip element **200** comprises at least one cordelle, and in at least this example, the strip element **200** comprises one cordelle **230** affixed to the strip element **200** at the longitudinal first edge portion **214** proximate the longitudinal first edge **215.** Herein by "cordelle", is meant a thread element or cord for example as described below, which, when enclosed within the strip element **200** proximate to the longitudinal first edge **215** thereof, provides reinforcement thereto. Such enclosure can be provided for example during an extrusion process of the strip element **200,** or can involve a separate step of folding an edge of the strip element **200** over and around the thread element, and subsequently securing the thread element in place using attachment arrangements such as adhesives, mechanical fixings such as sewing and stapling, applied heat and/or pressure, etc, and/or by friction. The cordelle **230,** when affixed to the strip element **200,** has an effective outer diameter **D.** The cordelle **230** is continuous and generally co-extensive with longitudinal first edge **215.** In alternative variations of this example, the cordelle can be interrupted, and thus there can be one or more first regions of the longitudinal first edge portion **214** proximate the longitudinal first edge **215** in which there is no cordelle along the longitudinal first edge **215,** interposed with one or more second regions of the longitudinal first edge **215** in which there is a cordelle along the longitudinal first edge **215.** In yet other alternative variations of this example, the cordelle can be provided laterally displaced from the longitudinal first edge **215,** so as to be distal therefrom. In yet other alternative variations of this example, strip element **200** comprises more than one cordelle - for example a first cordelle can be provided along the longitudinal first edge **215,** and/or a second cordelle can be provided at the longitudinal second edge portion **227** proximate and along the longitudinal second edge **225,** and/or one or more cordelle can be provided laterally displaced from the longitudinal first edge **215** and/or from the longitudinal second edge **225.**

While in this example the strip element **200** comprises at least one cordelle **230,** in some alternative variations of this example, the cordelle **230** can be omitted. The cordelle **230** is configured for reinforcing the first longitudinal edge portion **217,** in particular the first longitudinal edge **215.**

In at least this example each cordelle **230** is in the form of one or more thread element, having a diameter thicker than the thickness **t** of the strip element **200.** The thread element(s) can be made from a fabric, rope, metal, natural or synthetic polymeric resin, composites and so on, can comprise a single element or multiple elements arranged in a row, and can be coated with a natural or synthetic coating, e.g. a PVC coating. The fabric of the cordelle element can made from natural and/or synthetic yarns, for example nylon, polyester, acrylic or other synthetic yarns, similar to fabrics described above for the sheet element **200.**

Many examples of strip elements having a cordelle element are commercially available.

In this and other examples, the mounting strip **100** can be affixed to the panel **500** using any suitable fixing method, for example via mechanical fixing (for example staples, stitching, sewing, etc.) or welding (for example ultrasonic welding, heat welding, etc.), or via bonding (for example using suitable adhesives optionally including application of heat and/or pressure, e.g. with contact adhesives). Alternative arrangements for affixing include, but are not limited to, clips, studs, rivets, buttons, etc. Any suitable combination for the above affixing arrangements can be used, and the affixing may be a permanent affixing, or a reversible affixing.

The strip element can be made from fabric or textile comprising natural and/or synthetic yarns, for example nylon, polyester, acrylic or other synthetic yarns, plastic material. For example, the strip element **200** can be made from one or more of the following: PVC (Polyvinyl chloride), PE (Polyethylene), PP (Polypropylene), PA (Polyamide), PES (Polyester), Polyurethane, canvas, technical yarns such as Kevlar^{®}, Technora^{®}, Nomex^{®}, Dyneema^{®} and Vectran^{®}, and so on, wherein the fabric can optionally be coated with a suitable coating, such as waterproof, stiffening or other coatings for example.

In this example, and referring to Fig. 1(b), the mounting strip **100** is affixed to the panel **500** via widthwise overlap between respective overlapping portions of the panel **500** and of the mounting strip **100,** including part or all of the lower surface **220** of the strip element **200** and a longitudinal edge portion **510** of the panel **500** in overlying relationship with the lower surface **220** of the strip element **200.**

In alternative variations of this example, the mounting tape **100** can be affixed to the panel **500** by being formed integrally therewith.

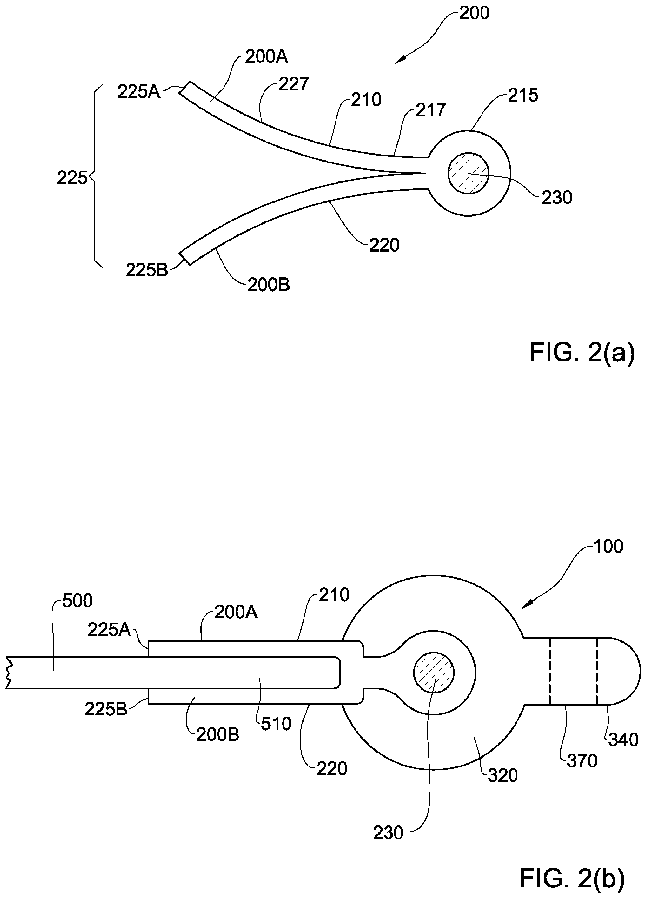

In other alternative variations of this example, and referring to Figs. 2(a) and 2(b), for example, the strip element **200** has a longitudinal second edge portion **227** that comprises two layers **200A, 200B,** joined together at the longitudinal first edge portion **217** which includes the longitudinal first edge **215** and the cordelle **230.** The second edge portion **227** is initially open, as illustrated in Fig. 2(a), and the longitudinal second edge **225** of the strip element **200** is provided by the transversely separated second edges **225A** and **225B** of the two layers **200A, 200B,** respectively. As shown in the example of Fig. 2(b), the mounting strip **100** is affixed to the panel **500** by first inserting the longitudinal edge portion **510** of panel **500** in-between the two layers **200A, 200B,** which are then in widthwise overlapping relationship with the longitudinal edge portion **510.** Thereafter the panel **500** is affixed to the mounting strip **100** by affixing the longitudinal edge portion **510** of panel **500** in-between the two layers **200A, 200B,** using any suitable fixing arrangement or method, for example via mechanical fixing (for example staples, stitching, sewing, etc.) or welding (for example ultrasonic welding, heat welding, etc.), or via bonding (for example using suitable adhesives optionally including application of heat and/or pressure, e.g. with contact adhesives).

Referring again to Fig. 1, the mounting strip **100** comprises a plurality of engagement elements **300** affixed at least to the first edge portion **217** including longitudinal first edge **215,** and optionally also to at least part of the second edge portion **227,** in a longitudinal serially spaced relationship, i.e., along the longitudinal dimension **L** of the mounting strip **100.**

In at least this example, each engagement element **300** is formed as a unitary article and comprises an anchor portion **320** and an engagement portion **340** projecting outwardly from the anchor portion **320** in a direction away from the strip element **200,** in particular in a transverse direction away from the strip element **200.** Thus, in at least this example, and also in other examples, the anchor portion **320** is different from the engagement portion **340**

The anchor portion **320** is configured for anchoring the respective engagement element **300** to the strip element **200,** in particular with respect to the first edge portion **217** including longitudinal first edge **215,** and optionally also including at least a portion of the second edge portion **227.**

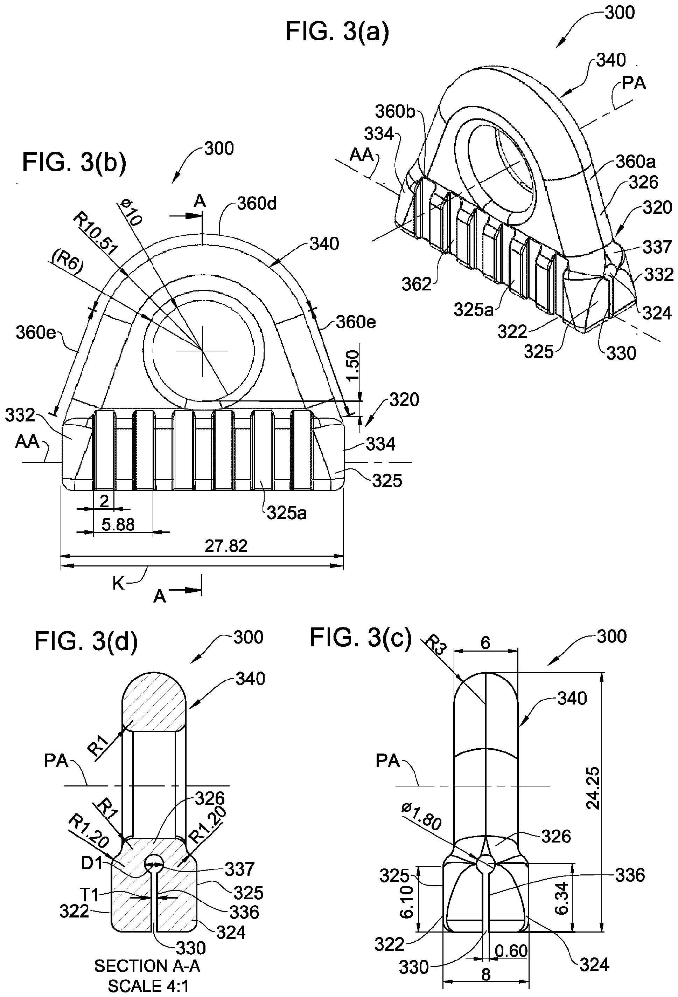

Referring also to Figs. 3(a) to 3(d), in this example the anchor portion **320** includes a body **325** of suitable material, typically a solid body, in a generally quadrilateral prismatic form with respect to a longitudinal axis **AA,** of generally rectangular cross-sectional area along lateral planes orthogonal to longitudinal axis **AA.** The body **325** has a transverse slot **330** extending outwardly from or near to the axis **AA.** The slot **330** is longitudinally coextensive with the body **325,** and thus extends between two longitudinal ends **332, 334** of the body **325.** The transverse cross-sectional shape of the slot **330** includes a generally rectangular portion **336** of width **T1** and a circular portion **337** connected to an inner end of the rectangular portion **336,** the circular portion **337** having a diameter **D1.** A profile or shape of the slot **330** is complementary to a transverse cross-sectional profile or shape of the first edge portion **217** including longitudinal first edge **215** and cordelle **230,** and thus width **T1** and diameter **D1** correlate to (and are nominally equal to) the thickness **t** of the strip element **200** and the outer diameter at the cordelle **230** (including the diameter **D** of the cordelle **230** plus the thickness (2*t) of fabric or material around the cordelle **230),** respectively.

In view of the slot **330,** the body **325** can also be considered to have a generally inverted-U shaped transverse cross-section, with two anchoring element **322, 324** joined to a base element **326.** The anchoring element **322, 324** are configured to be located on opposite sides of the strip element **200,** and thus when engagement element **300** is affixed to the strip element **200,** the anchoring elements **322, 324** are in gripping relationship with the upper surface **210** and lower surface **220,** respectively, of the strip element **200.**

In at least this example, the engagement portion **340** is joined with the body **325,** in particular with the base element **326.** Such joining may be by application of fixing arrangements such as welding and adhering for example, or can be by integral forming, such as by casting, injection molding or other methods for example. The engagement portion **340** includes a loop structure **360** defining an opening **370** therein.

As will become clear herein, in at least this example, engagement portion **340,** in particular the loop structure **360,** is in the form of a solid body of material. The solid body of the loop structure **360** comprises a base edge **360c** joined with the base element **326** along a length thereof parallel to the longitudinal axis thereof, such that two longitudinal ends **360a, 360b** of the loop structure extend to the two longitudinal ends **332, 334** of the body **325.** The respective opening is circumscribed and thereby defined by the loop structure **360** and in this example takes the form of a circular bore passing therethrough along a passage axis **PA.**

In this example, as seen in Fig. 3(b), a profile of an outer surface the loop structure **360,** when viewed in a plane perpendicular to the passage axis, comprises a central portion **360d** spaced radially outwardly of the bore opening **370** in the form of an arc having a centre of curvature coincident with the passage axis **PA** and an arc length of less than 180°, and two sloped linear portions **360e,** each being tangential to the central portion **360d** at an end thereof and extending from the central portion **360d,** away from the passage axis **PA,** to the two longitudinal ends **360a, 360b** of the loop structure **360.**

The opening **370** is dimensioned, for example having an open area and/or width, larger than the transverse dimensions of the respective connection element **600,** for example the transverse cross-sectional area and/or transverse width (or diameter), respectively, of the connection element **600.** In this connection, the term "transverse" refers to being along a plane perpendicular to a longitudinal direction of the connection element **600.** In this manner, the connection element **600** can easily be threaded, looped or otherwise connected to and/or through the opening **370.**

Referring in particular to Figs. 3(a) and 3(b), in at least this example the loop structure **360** is in the form of a solid body of material fully circumscribing and thereby defining the opening **370.** The opening **370** of the loop structure **360** allows for passage of the connection element **600** through the loop structure **360** along the passage axis **PA.**

Optionally, the body **325** can have a plurality of ridges **325a,** for example in the form of transverse ribs, formed on the outer surface of the body **325** extending in a direction transverse to the longitudinal axis **AA** of the body **325.**

In this example, the passage axis **PA is** nominally orthogonal to the longitudinal axis **AA** of the body **325.**

By way of non-limiting example, Figs. 3(b), 3(c) and 3(d) provide dimensional data (in mm) for various parts of the engagement element **300** (with general tolerance of, for example, ±0.05), according to one implementation of this example. In alternative implementations of this example, the dimensional data can be changed pro-rata, for example all annotated dimensions can be increased or decreased in the same proportion, for example can be increased by 50%, 100%, 150%, 200% and so on, or decreased by 10%, 25%, 50% and so on.

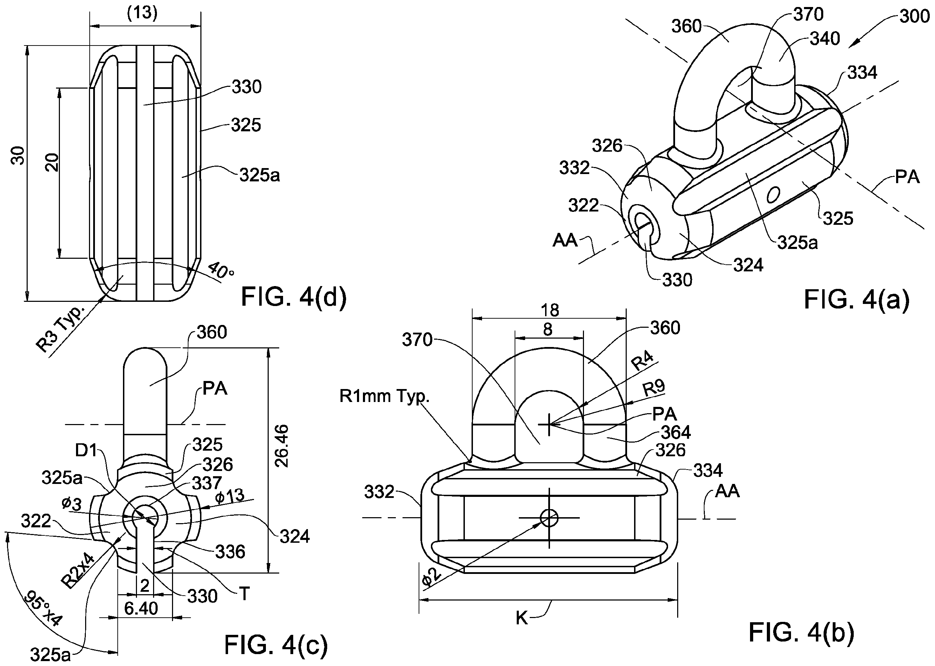

An alternative variation of the example of engagement element **300** of Figs. 3(a) to 3(d) is illustrated in Figs. 4(a) to 4(d).

Referring to Figs. 4(a) to 4(d), in this example the anchor portion **320** includes a body **325** of suitable material, typically a solid body, in a generally cylindrical form with respect to a longitudinal axis **AA.** The body **325** has a radial slot **330** extending outwardly from or near to the axis **AA.** The slot **330** is longitudinally coextensive with the body **325,** and thus extends between two longitudinal ends **332, 334** of the body **325.** The transverse cross-sectional shape of the slot **330** includes a generally rectangular portion **336** of width **T1** and a circular portion **337** connected to an inner end of the rectangular portion **336,** the circular portion **337** having a diameter **D1.** A profile or shape of the slot **330** is complementary to a transverse cross-sectional profile or shape of the first edge portion **217** including longitudinal first edge **215** and cordelle **230,** and thus width **T1** and diameter **D1** correlate to (and are nominally equal to) the thickness **t** of the strip element **200** and the outer diameter at the cordelle **230** (including the diameter **D** of the cordelle **230** plus the thickness (2*t) of fabric or material around the cordelle **230),** respectively .

In view of the slot **330,** the body **325** can also be considered to have a generally inverted-U shaped transverse cross-section, with two anchoring element **322, 324** joined to a base element **326.** The anchoring element **322, 324** are configured to be located on opposite sides of the strip element **200,** and thus when engagement element **300** is affixed to the strip element **200,** the anchoring elements **322, 324** are in gripping relationship with the upper surface **210** and lower surface **220,** respectively, of the strip element **200.**

In at least this example, the engagement portion **340** is joined with the body **325,** in particular with the base element **326.** The engagement portion **340** includes a loop structure **360** defining an opening **370** therein.

As will become clear herein, in at least this example, engagement portion **340,** in particular the loop structure **360,** is in the form of a ring of material partially circumscribing and thereby defining the respective opening **370.**

The opening **370** is dimensioned, for example having an open area and/or width, larger than the transverse dimensions of the respective connection element **600,** for example the transverse cross-sectional area and/or transverse width (or diameter), respectively, of the connection element **600.** In this connection, the term "transverse" refers to being along a plane perpendicular to a longitudinal direction of the connection element **600.** In this manner, the connection element **600** can easily be threaded, looped or otherwise connected to and/or through the opening **370.**

Referring in particular to Figs. 4(a) and 4(b), in at least this example the loop structure **360** is in the form of a ring of material fully circumscribing and thereby defining the opening **370.** In this example, one part **362** of the loop structure **360** is defined by the base element **326,** while the remainder of the loop structure **360** is defined by a second, C-shaped part **364** joined to the base element **326.** The opening **370** of the loop structure **360** allows for passage of the connection element **600** through the loop structure **360** along a passage axis **PA.**

Optionally, the body **325** can have a plurality of ridges **325a,** for example in the form of longitudinal channels, formed on the outer surface of the body **325** extending in a direction parallel to the longitudinal axis **AA** of the body **325.**

In this example, the passage axis **PA is** nominally orthogonal to the longitudinal axis **AA** of the body **325.**

Thus, referring also to Figs. 4(a) to 4(d), in this example the anchor portion **320** includes a body **325** of suitable material, typically a solid body, in a generally cylindrical form with respect to a longitudinal axis **AA.** The body **325** has a radial slot **330** extending outwardly from or near to the axis **AA.** The slot **330** is longitudinally coextensive with the body **325,** and thus extends between the two longitudinal ends **332, 334** of the body **325.** The transverse cross-sectional shape of the slot **330** includes a generally rectangular portion **336** of width **T1** and a circular portion **337** connected to the inner end of the rectangular portion **336,** the circular portion **337** having a diameter **D1.** The profile or shape of the slot **330** is complementary to the transverse cross-sectional profile or shape of the first edge portion **217** including longitudinal first edge **215** and cordelle **230,** and thus width **T1** and diameter **D1** correlate to (and are nominally equal to) the thickness **t** of the strip element **200** and diameter **D** of the cordelle **230,** respectively.

In view of the slot **330,** the body **325** can also be considered to have a generally inverted-U shaped transverse cross-section, with two anchoring element **322, 324** joined to a base element **326.** The anchoring element **322, 324** are configured to be located on opposite sides of the strip element **200,** and thus when engagement element **300** is affixed to the strip element **200,** the anchoring elements **322, 324** are in gripping relationship with the upper surface **210** and lower surface **220,** respectively.

In at least this example, the engagement portion **340** is joined with the body **325,** in particular with the base element **326.** The engagement portion **340** includes a loop structure **360** defining an opening **370** therein.

As will become clear herein, in at least this example, engagement portion **340,** in particular the loop structure **360,** is in the form of a ring of material partially circumscribing and thereby defining the respective opening **370.**

The opening **370** is dimensioned, for example has an open area and/or width, larger than the transverse dimensions of the respective connection element **600,** for example the transverse cross-sectional area and/or transverse width (or diameter), respectively, of the connection element **600.**

Referring in particular to Figs. 4(a) and 4(b), in at least this example the loop structure **360** is in the form of a ring of material fully circumscribing and thereby defining the opening **370.** In this example, one part **362** of the loop structure **360** is defined by the base element **326,** while the remainder of the loop structure **360** is defined by a second, C-shaped part **364** joined to the base element **326.** The opening **370** of the loop structure **360** allows for passage of the connection element **600** through the loop structure **360** along a passage axis **PA.**

Optionally, the body **325** can have a plurality of ridges **325a,** for example in the form of longitudinal channels, formed on the outer surface of the body **325.**

In this example, the passage axis **PA is** nominally orthogonal to the longitudinal axis **AA** of the body **325.**

By way of non-limiting example, Figs. 4(b), 4(c), 4(d) provide dimensional data (in mm) for various parts of the engagement element **300** (with tolerance of, for example, ±0.05), according to one implementation of this example. In alternative implementations of this example, the dimensional data can be changed pro-rata, for example all annotated dimensions can be increased or decreased in the same proportion, for example can be increased by 50%, 100%, 150%, 200% and so on, or decreased by 10%, 25%, 50% and so on.

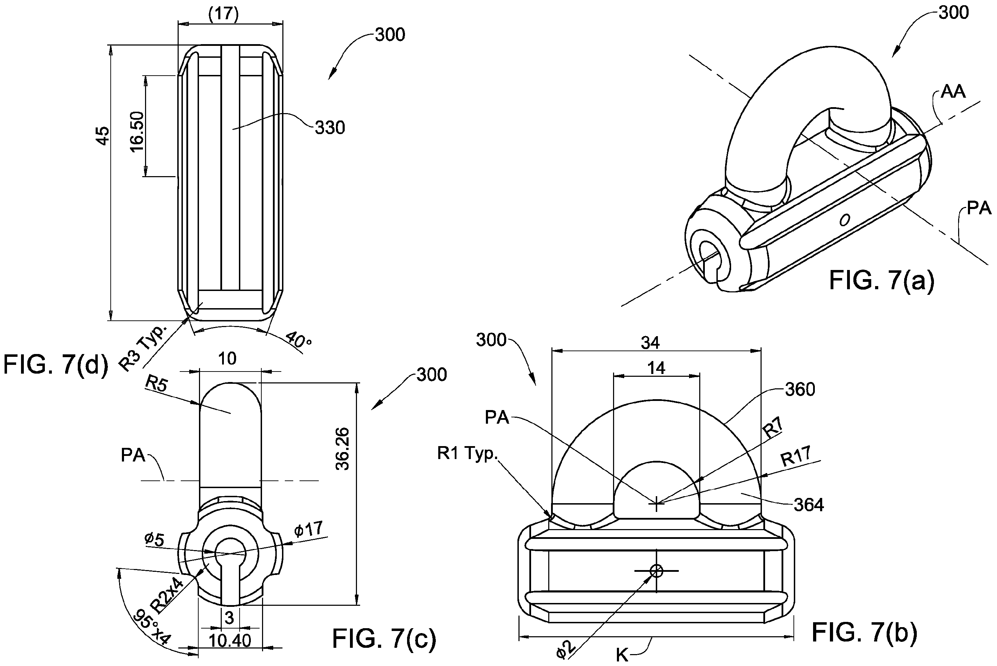

The following is applicable to any of the examples of Figures 3(a) to 3(d) and 4(a) to 4(d), or indeed, any of the examples in Figures 7(a) to 7(d), 8(a) to 8(d), 9(a) to 9(e), 10(a) to 10(d) and 11(a) to 11(d) described below.

As already mentioned, and referring again to Fig. 1, the engagement elements **300** are affixed to the first longitudinal edge **215** in longitudinal spaced relationship in which consecutive engagement elements **300** are longitudinally spaced from one another by a longitudinal spacing **J** (see Fig. 1). In this example the longitudinal spacing **J** is the same as, or greater than, the longitudinal dimension **K** of the body **325.** For example, the ratio **J:K** can be any desired number from about 1 to about 30, or greater than 30, for example any one of 1.5, 2. 2.5, 3, 3.5, 4, 4.5, 5, 5.5, 6, 6.5, 7, 7.5, 8, 8.5, 9, 9.5, 10, 11, 12, 13,14, 15, 16, 17, 18, 19, 20, 21, 22, 23, 24, 25, 26, 27, 28, 29, 30, 35, 40, 45, 50, 55, 60, 65, 70, 75, 80, 85, 90, 95, 100. Alternatively, the ratio J:K can be within any range N to M, wherein N is any number chosen from the group of 1.5, 2. 2.5, 3, 3.5, 4, 4.5, 5, 5.5, 6, 6.5, 7, 7.5, 8, 8.5, 9, 9.5, 10, 11, 12, 13,14, 15, 16, 17, 18, 19, 20, 21, 22, 23, 24, 25, 26, 27, 28, 29, 30, 35, 40, 45, 50, 55, 60, 65, 70, 75, 80, 85, 90, 95, 100, and wherein M is any number chosen from the group of 1.5, 2. 2.5, 3, 3.5, 4, 4.5, 5, 5.5, 6, 6.5, 7, 7.5, 8, 8.5, 9, 9.5, 10, 11, 12, 13,14, 15, 16, 17, 18, 19, 20, 21, 22, 23, 24, 25, 26, 27, 28, 29, 30, 35, 40, 45, 50, 55, 60, 65, 70, 75, 80, 85, 90, 95, 100.

In any case, in at least the above examples, the engagement elements **300** are injection-molded directly onto the strip member **200,** and are made from a material suitable for this purpose, for example thermoplastic materials, including any one or more of the following materials, for example: POM (Polyoxymethylene), PBT (Polybutylene terephthalate), PA (Polyamide), acrylic polymers such as PMMA (polymethylmethacrylate), PPS (polyphenylene sulfide), and so on. For this purpose, and according to one example, the strip member **200** is placed into a suitable mold having a plurality of serially disposed mold cavities, each corresponding and complementary to the outer shape of the engagement element **300** to be formed, and suitable material is injected into the mold cavities to thereby form by injection molding the respective engagement elements **300** directly onto the strip member **200.**

Optionally, the strip member **200** can be formed with at least one through-hole (not shown) formed at a location at which each anchoring element **322, 324** is to be formed in a superposed manner. Thus, as the anchoring elements **322, 324** are injection-molded onto the strip member **200,** integrally straddling the first edge **215** and cordelle **230,** the anchoring elements **322, 324** further include an integral and uninterrupted material connection between the two the anchoring elements **322, 324** via the through-hole.

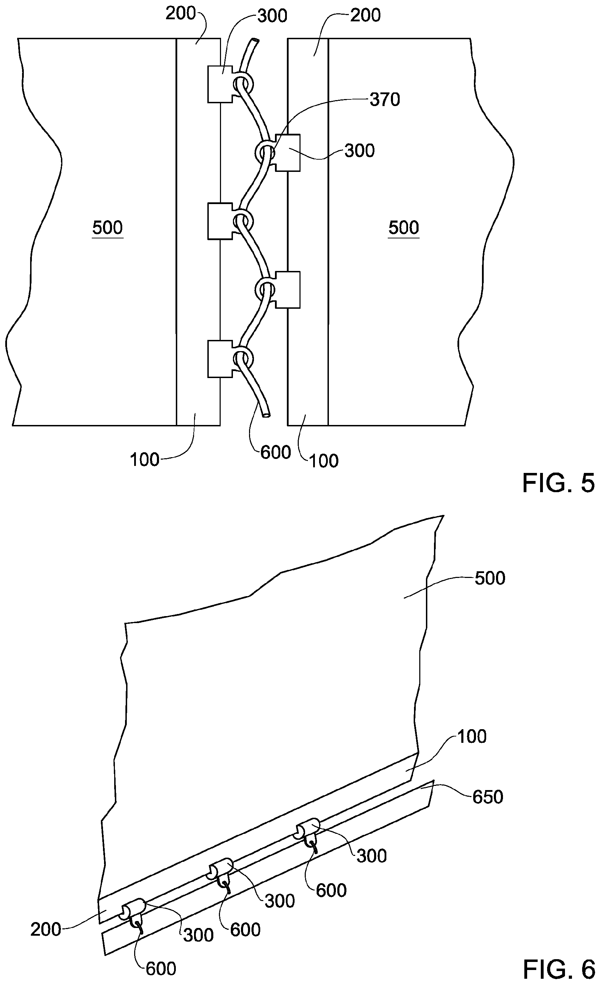

In one example, and referring to Fig. 5, in one application of the above example, two panels **500** are placed side by side such that their respective mounting strips **100** are facing one another. The two panels **500** are secured together by passing a connection element **600,** in the form of a cord element, through the respective openings **370** of the respective engagement elements **300** of the respective mounting strips **100** in an alternating manner between the panels **500.** Applying tension to the connection element **600** brings the two panels **500** together and secures the two together.

In another example, and referring to Fig. 6, in another application of the above example, one panel **500** is secured to a bracket **650** having a plurality of connection elements **600,** each connection element **600** being in the form of one or more hooks. This securing is accomplished by hooking each hook through the respective openings **370** of the respective engagement elements **300** of the respective mounting strip **100** of the panel **500.**

An alternative variation of the example of engagement elements **300** of Figs. 4(a) to 4(d) is illustrated in Figs. 7(a) to 7(d). In the example of Figs. 7(a) to 7(d) the relative thickness of the corresponding loop structure **360,** in particular of C-shaped part **364** relative to the outer diameter or to the longitudinal dimension **K** of the body **325,** is greater than in the example of Figs. 4(a) to 4(d). By way of non-limiting example, Figs. 7(b), 7(c), 7(d) provide dimensional data (in mm) for various parts of the engagement element **300** (with tolerance of, for example, ±0.05), according to one implementation of this variation of the example of Figs. 4(a) to 4(d). In yet other alternative implementations of this variation of the example of Figs. 4(a) to 4(d), the dimensional data can be changed pro-rata, for example all annotated dimensions can be increased or decreased in the same proportion, for example can be increased by 50%, 100%, 150%, 200% and so on, or decreased by 10%, 25%, 50% and so on.

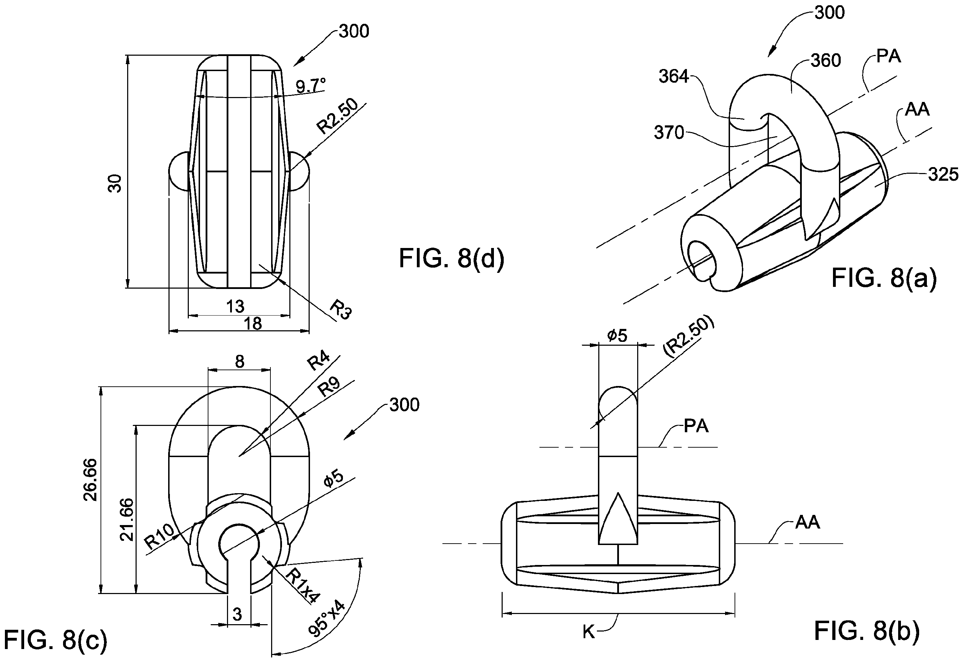

Another alternative variation of the example of engagement elements **300** of Figs. 4(a) to 4(d) is illustrated in Figs. 8(a) to 8(d). In the example of Figs. 8(a) to 8(d) the relative orientation of the corresponding loop structure **360,** in particular of C-shaped part **364** relative to the body **325,** is different from that in the example of Figs. 4(a) to 4(d). In the example of Figs. 8(a) to 8(d) the relative orientation of the corresponding loop structure **360,** in particular of C-shaped part **364** relative to the body **325,** is such that the opening **370** of the loop structure **360** allows for passage of the connection element **600** through the loop structure **360** along a passage axis **PA,** wherein the passage axis **PA** is nominally non-orthogonal to the longitudinal axis **AA** of the body **325.** In the example of Figs. 8(a) to 8(d) the passage axis **PA** is nominally parallel to the longitudinal axis **AA** of the body **325,** while in alternative variations of this example, the passage axis **PA** can be at any acute angle to the longitudinal axis **AA** of the body **325,** for example any angle including any one of 5°, 10°, 15°, 20°, 25°, 30°, 35°, 40°, 45°, 50°, 55°, 60°, 65°, 70°, 75°, 80°, 85°. Alternatively or additionally, the aforesaid acute angle can be in any one of the following ranges: 5° to 85°, 10° to 80°, 15° to 75°, 20° to 70°, 25° to 65°, 30° to 60°, 35° to 55°, 40° to 50°, 5° to 45°, 45° to 85°, 5° to 65°. By way of non-limiting example, Figs. 8(b), 8(c), (d) provide dimensional data (in mm) for various parts of the engagement element **300** (with tolerance of, for example, ±0.05), according to one implementation of this variation of the example of Figs. 4(a) to 4(d). In yet other alternative implementations of this variation of the example of Figs. 4(a) to 4(d), the dimensional data can be changed pro-rata, for example all annotated dimensions can be increased or decreased in the same proportion, for example can be increased by 50%, 100%, 150%, 200% and so on, or decreased by 10%, 25%, 50% and so on.

It is to be noted that in yet other alternative variations of the above examples, the corresponding loop structure is in the form of a ring of material that while fully circumscribing and thereby defining the respective opening, is nevertheless in a "split ring" configuration, or "cotter ring" configuration, or "kickout ring" configuration. In such configurations, the corresponding loop structure is in the form of an open helical loop, allowing for the insertion of another closed loop or ring into the loop structure in general orthogonal configuration. Alternatively, there may be provided two partial-rings placed adjacent to one another, with or without a gap in between.

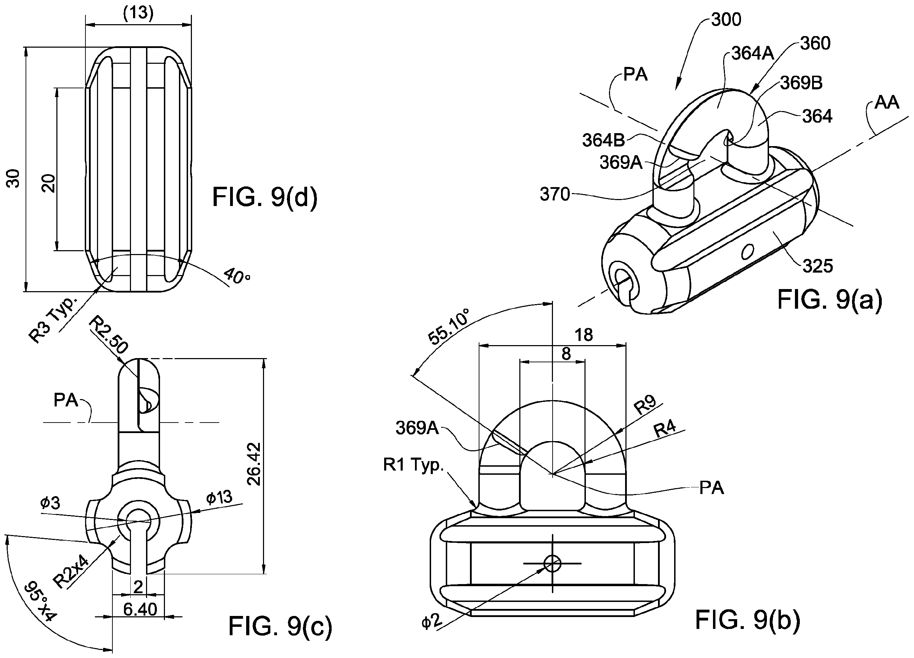

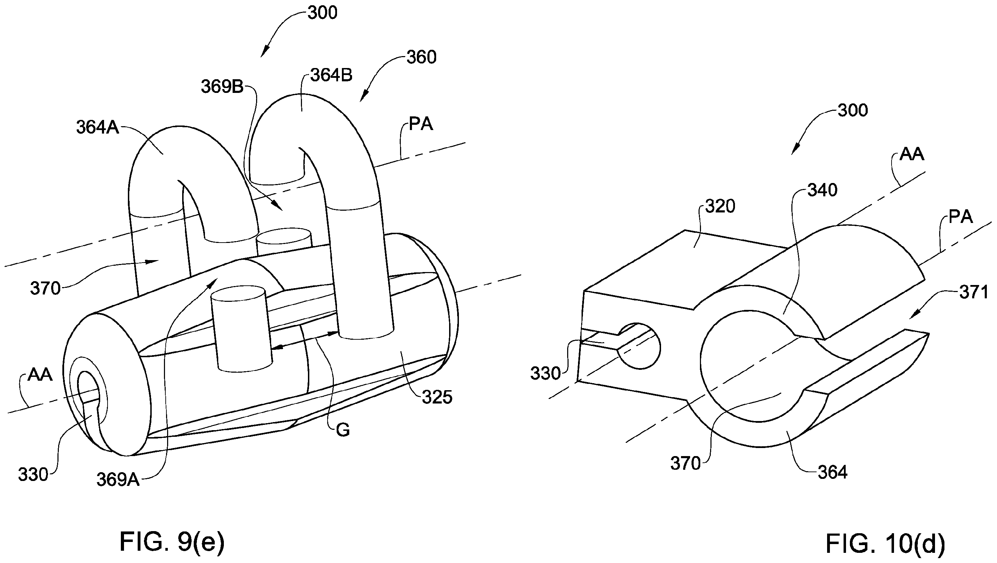

Thus, another alternative variation of the example of engagement element **300** of Figs. 4(a) to 4(d) is illustrated in Figs. 9(a) to 9(d). In the example of Figs. 9(a) to 9(d) the corresponding loop structure **360,** in particular of C-shaped part **364** relative to the body **325,** is different from that in the example of Figs. 4(a) to 4(d). In the example of Figs. 9(a) to 9(d) the corresponding loop structure **360,** in particular C-shaped part **364,** is in the form of an open helical loop. More specifically, the corresponding loop structure **360,** in particular of C-shaped part **364,** is formed as two J-shaped parts **364A, 364B** in transverse partial overlapping relationship. In this example the two J-shaped parts **364A, 364B** are in abutment transversely, while in alternative variations of this example a small transverse gap can be provided between the two J-shaped parts **364A, 364B** (see below for example regarding the example of Fig. 9(e)). The partial transverse overlap between the two J-shaped parts **364A, 364B** provides for corresponding loop openings **369A, 369B,** respectively, that allows access to the opening **370** via resilient transient separation of the two J-shaped parts **364A, 364B.** Thus, another ring element (not shown) can be looped into engagement with the loop structure **360,** in particular with C-shaped part **364.** In any case, the opening **370** of the loop structure **360** allows for passage of the connection element **600** (or another ring element) through the loop structure **360** along a passage axis **PA.** In the example of Figs. 9(a) to 9(d), the passage axis **PA** is nominally orthogonal to the longitudinal axis **AA** of the body **325;** in alternative variations of this example the corresponding open loop structure of the corresponding loop structure **360** can be similar to the example of Figs. 8(a) to 8(d), for example, and in such a case the passage axis **PA** is nominally parallel to the longitudinal axis **AA** of the body **325;** in yet other alternative variations of this example, the passage axis **PA** can be at any acute angle to the longitudinal axis **AA** of the body **325,** for example any angle including any one of: 5°, 10°, 15°, 20°, 25°, 30°, 35°, 40°, 45°, 50°, 55°, 60°, 65°, 70°, 75°, 80°, 85°. Alternatively or additionally, the aforesaid acute angle can be in any one of the following ranges: 5° to 85°, 10° to 80°, 15° to 75°, 20° to 70°, 25° to 65°, 30° to 60°, 35° to 55°, 40° to 50°, 5° to 45°, 45° to 85°, 5° to 65°.

Fig. 9(e) shows an alternative arrangement for an engagement element **300,** having a body **325** comprising a longitudinal axis **AA.** The corresponding loop structure **360,** in particular of C-shaped part **364** relative to the body **325,** is different from that in the example of Figs. 9(a) to 9(d). In the example of Fig. 9(e), the corresponding loop structure **360,** is in the form of two partial-rings **364A, 364B** having a broken-U-type shape, parallel to one another and spaced by a gap **G.** In this example, the two broken-U-shaped parts **364A, 364B** each comprise a loop opening **369A, 369B,** respectively in the broken-part of the U-shape, that allows access to the opening **370.** Thus, another ring element (not shown) can be looped into engagement with the loop structure **360.** In any case, the opening **370** of the loop structure **360** allows for passage of the connection element **600** (or another ring element) through the loop structure **360** along a passage axis **PA.** The two loop openings **369A, 369B** of the two partial-rings **364A, 364B** having a broken-U-type shape are at opposite sides of the loop structure **360,** because the two partial-rings **364A, 364B** face in opposite direction. In this way, a connection element **600** (or another ring element) passing through the opening **370** cannot be accidentally disengaged therefrom by sliding to one side or the other. In the example of Fig. 9(e), the passage axis **PA is** nominally parallel to the longitudinal axis **AA** of the body **325;** in alternative variations of this example the corresponding open loop structure of the corresponding loop structure **360** can be similar to the example of Figs. 9(a) to 9(d), for example, and in such a case the passage axis **PA is** nominally orthogonal to the longitudinal axis **AA** of the body **325;** in yet other alternative variations of this example, the passage axis **PA** can be at any acute angle to the longitudinal axis **AA** of the body **325,** for example any angle including any one of: 5°, 10°, 15°, 20°, 25°, 30°, 35°, 40°, 45°, 50°, 55°, 60°, 65°, 70°, 75°, 80°, 85°. Alternatively or additionally, the aforesaid acute angle can be in any one of the following ranges: 5° to 85°, 10° to 80°, 15° to 75°, 20° to 70°, 25° to 65°, 30° to 60°, 35° to 55°, 40° to 50°, 5° to 45°, 45° to 85°, 5° to 65°. Alternatively or additionally, the two partial-rings **364A, 364B** having a broken-U-type shape may be orientated at different angles to one another, such that the passage axis **PA** may comprise a bend, curve or discontinuity between one partial-ring **364A, 364B** and the next.

By way of non-limiting example, Figs. 9(b), 9(c) and 9(d) provide dimensional data (in mm) for various parts of the engagement element **300** (with general tolerance of, for example, ±0.05), according to one implementation of this variation of the example of Figs. 4(a) to 4(d). In yet other alternative implementations of this variation of the example of Figs. 4(a) to 4(d), the dimensional data can be changed pro-rata, for example all annotated dimensions can be increased or decreased in the same proportion, for example can be increased by 50%, 100%, 150%, 200% and so on, or decreased by 10%, 25%, 50% and so on.

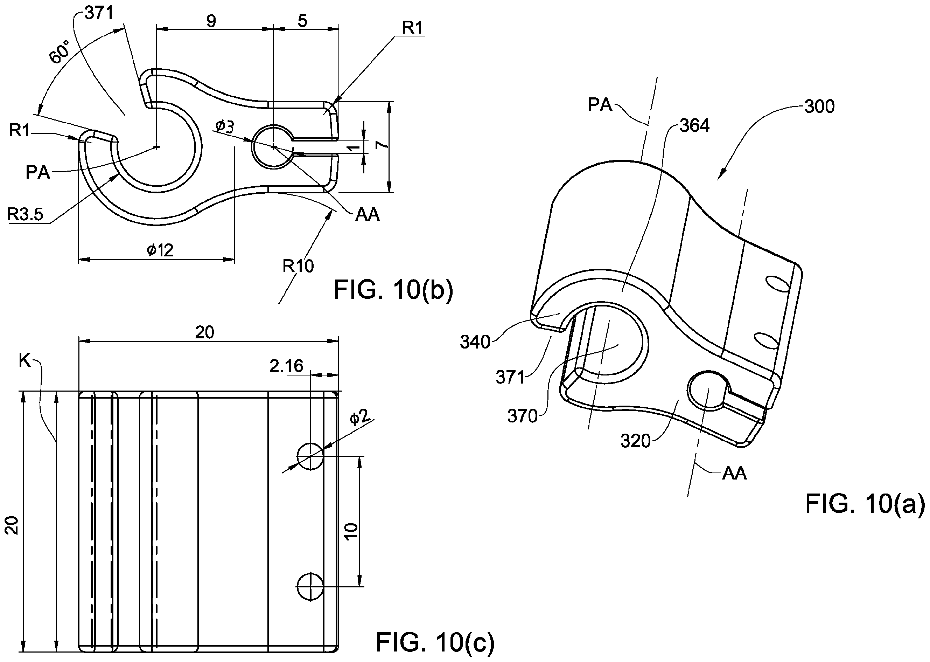

It is to be noted that in yet other alternative variations of the above examples, the corresponding loop structure is in the form of a partial ring of material that only partially circumscribes and thereby defines the respective opening. Thus, another alternative variation of the example of engagement elements **300** of Figs. 4(a) to 4(d) is illustrated in Figs. 10(a) to 10(c). In the example of Figs. 10(a) to 10(c) the corresponding loop structure **360,** in particular C-shaped part **364,** is different from that in the example of Figs. 4(a) to 4(d). In the example of Figs. 10(a) to 10(c) the corresponding loop structure **360,** in particular C-shaped part **364,** only partially circumscribes the respective opening **370,** which, as in other examples, allows for passage of the connection element **600** transversely through side opening **371** (made by the gap in the "C") and also through the loop structure **360** along a passage axis **PA.** In the example of Figs. 10(a) to 10(c) the loop structure **360** is in the form of a "C" or a hook, and allows the corresponding engagement element **300** to be hooked to a suitable structure.

Alternatively, as shown in the example of Fig. 10(d), the corresponding loop structure **360,** in particular C-shaped part **364,** can be different from that in the example of Figs. 10(a) to 10(c). In the example of Fig. 10(d), the opening **371** (made by the gap in the "C") is a central opening rather than a side-opening. The opening **371** allows for passage of the connection element **600** transversely through the opening **371** and also through the loop structure **360** along a passage axis **PA.** Since the loop structure **360** is in the form of a "C" or a hook, the corresponding engagement element **300** can be hooked, or clipped onto to a suitable structure. For example, a suitable structure can comprise a cable, and the loop structure **360** may be configured to disconnect from the cable, by the cable passing through the gap or opening **371** under applied loads above a pre-determined threshold.

In the examples of Figs. 10(a) to 10(d) the respective passage axis **PA** is nominally parallel to the longitudinal axis **AA** of the body **325.** In alternative variations of the example of Figs. 10(a) to 10(d) the respective passage axis **PA** is nominally orthogonal to the longitudinal axis **AA** of the body **325,** while in alternative variations of this example, the passage axis **PA** can be at any acute angle to the longitudinal axis **AA** of the body **325,** for example any angle including any one of 5°, 10°, 15°, 20°, 25°, 30°, 35°, 40°, 45°, 50°, 55°, 60°, 65°, 70°, 75°, 80°, 85°. Alternatively or additionally, the aforesaid acute angle can be in any one of the following ranges: 5° to 85°, 10° to 80°, 15° to 75°, 20° to 70°, 25° to 65°, 30° to 60°, 35° to 55°, 40° to 50°, 5° to 45°, 45° to 85°, 5° to 65°. By way of non-limiting example, Figs. 8(b), 8(c), (d) provide dimensional data (in mm) for various parts of the engagement element **300** (with tolerance of, for example, ±0.05), according to one implementation of this variation of the example of Figs. 4(a) to 4(d). In yet other alternative implementations of this variation of the example of Figs. 4(a) to 4(d), the dimensional data can be changed pro-rata, for example all annotated dimensions can be increased or decreased in the same proportion, for example can be increased by 50%, 100%, 150%, 200% and so on, or decreased by 10%, 25%, 50% and so on.

For example, the engagement elements **300** of the example of Figs. 10(a) to 10(c) can be affixed with respect to the strip element **200** in an alternating manner, i.e., wherein each successive engagement element **300** in the longitudinal direction AA has the opening **371** of the C-shaped hook facing a direction opposite from the direction faced by the opening **371** of the previous engagement element **300.**

In the examples illustrated in Fig. 3(a) to Fig. 10(d) the corresponding engagement elements **300** are contemplated to be unitary structures, in which the anchor portion **320** is integrally formed with the respective engagement portion **340;** in particular, the engagement elements **300** are injection molded directly to the strip element **200,** as discussed above. However, in alternative variations of the above examples, the anchor portion **320** is not integrally formed with the respective engagement portion **340.** Rather, the anchor portion **320** of the engagement elements **300** is injection molded directly to the strip element **200,** and the engagement portion **340** (which is manufactured separately from the anchor portion **320)** is affixed to the anchor portion **320** after this is injection molded to the strip element **200.** Alternatively, the anchor portion **320** of the engagement elements **300** is injection molded directly to the strip element **200** and concurrently also to the engagement portion **340.**

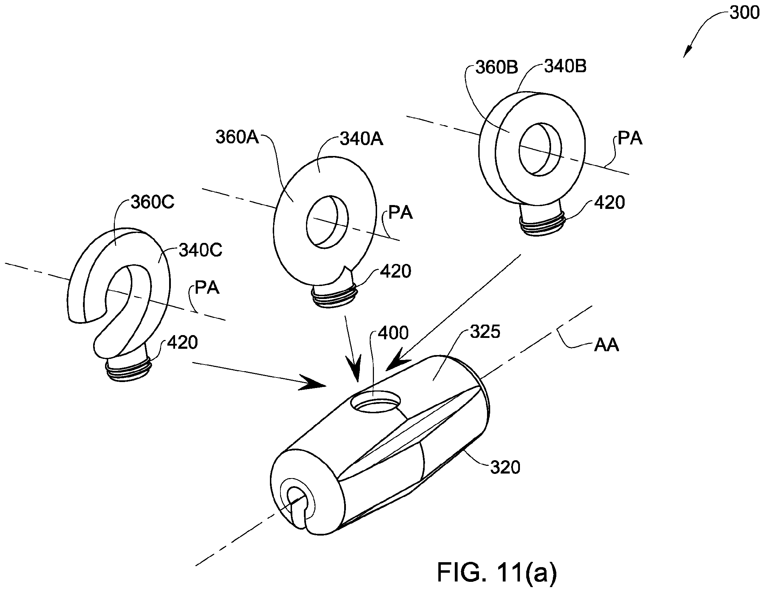

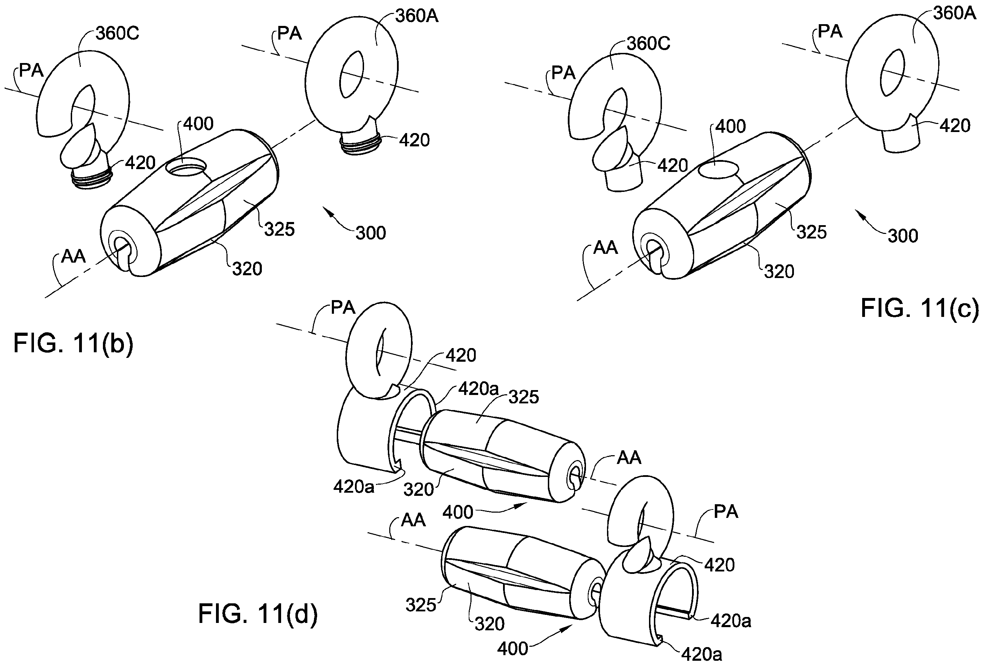

Thus, referring to Figs. 11(a), 11(b), 11(c) and 11(d), in another alternative variation of the above examples, the respective engagement element **300** comprises an anchor portion **320** in the form of body **325,** substantially similar to body **325** as disclosed above for the examples of Fig. 3(a) to Fig. 10(d), *mutatis mutandis,* with the main difference being that in the example of Figs. 11(a) to 11(d) there is provided a body interface **400** for affixing to the respective engagement portion **340** which is provided separately from the anchor portion **320.**

In the example of Figs. 11(a), 11(b) and 11(c), the body interface **400** is in the form of a bore, which may be a blind-bore or a through-bore, into the body **325.**

In this example, there are a variety of different engagement portions **340,** each of which can be affixed to the corresponding body **325.** The different engagement portions **340** include: a first engagement portion **340A,** a second engagement portion **340B,** and a third engagement portion **340C.**

In this example, the anchor portion **320** and the engagement portion **340** can be made from the same materials or from different materials. For example, if made from the same materials, these materials can be similar to those disclosed above for the other examples illustrated in Figs. 1 to 10, *mutatis mutandis.* For example, if made from different materials, the materials for the anchor portion **320** can be similar to those disclosed above for the other examples illustrated in Figs. 1 to 10, *mutatis mutandis,* while the engagement portion **340** can be made from any other material, for example metal, wood, composites, etc.

The anchor portion **320** in this and other examples can be made from the same material as the strip element **200.** Alternatively, the anchor portion **320** in this and other examples can be made from a different material from the strip element **200.**

The first engagement portion **340A** is in the form of a closed loop structure, or closed loop member **360A** having an engagement portion interface **420.** The engagement portion interface **420** is substantially complementary to the body interface **400** and is configured for affixing to the body interface **400.** For example, as shown in Figs. 11(a) and 11(b), the engagement portion interface **420** comprises an external screw thread, while the body interface **400** is in the form of a bore having an internal screw thread substantially complementary to the aforesaid external screw thread, thereby enabling the first engagement portion **340A** to be screwed into the anchor portion **320.** In alternative variations of the above example any other suitable arrangement can be used for engagement portion interface **420** and the body interface 400. For example, as shown in Fig. 11(c) the engagement portion interface **420** can comprise a shaft that is received in the body interface **400,** for example in a bore provided in the body interface **400,** and a suitable adhesive, solder, weld or other material or arrangement can be used to bond the two together. Alternatively or additionally, for example, as shown in Fig. 11(d), the engagement portion interface **420** can comprise a snap-fit arrangement, for example having a semi-circular clasp with two end engagement portions **420a** configured to snap-fit into, slide into, or otherwise engage with longitudinal grooves and/or ribs of the body interface **400.**

As shown particularly in Fig. 11(d), the second engagement portion **340B** is in the form of a loop structure **360B** having an engagement portion interface **420.** The loop structure **360A** is in the form of an open helical loop, allowing for the insertion of another closed loop or ring into the loop structure in general orthogonal configuration. Alternatively, the loop structure may be in the form of two partial-rings placed against one another as described above, for example, as shown in Fig. 10(d), in which case each partial-ring 364A, 364B may be attached via a separate engagement portion interface **420** to the body interface **400.** Although the second engagement portion **340B** is not depicted in any of Figs. 11(b) to 11(d), the engagement portion interface **420** can be similar to any of the engagement portion interfaces **420** described above with respect to the first engagement portion 340A, *mutatis mutandis,* for interfacing with the corresponding body interface **400.**

The third engagement portion **340C** is in the form of an open loop structure **360C** having an engagement portion interface **420.** The open loop structure **360C** is in the form of a "C" or hook, i.e. in the form of a partial ring of material that only partially circumscribes and thereby defines the respective opening. The engagement portion interface **420** can be similar to any of the engagement portion interfaces **420** disclosed above with respect to the first engagement portion **340A,** *mutatis mutandis,* for interfacing with the corresponding body interface **400.**

In the example of Figs. 11(a) to 11 (d), each one of the different engagement portions **340** (i.e. the first engagement portion **340A,** or the second engagement portion **340B,** or the third engagement portion **340C)** can be affixed to the anchor portion **320** (via the respective engagement portion interface **420** and the body interface **400)** at any desired orientation with respect to one another, such that the respective passage axis **PA** of the respective different engagement portion **340** is nominally orthogonal to the longitudinal axis **AA** of the body **325.** In alternative variations of the examples of Figs. 11(a) to 11(d), the different engagement portions **340A** or **340B** or **340C** can be affixed at an orientation such that the passage axis **PA** is nominally parallel to the longitudinal axis **AA** of the body **325,** while in alternative variations of this example, the affixing can be at an orientation such that the passage axis **PA** can be at any acute angle to the longitudinal axis **AA** of the body **325,** for example any angle including any one of 5°, 10°, 15°, 20°, 25°, 30°, 35°, 40°, 45°, 50°, 55°, 60°, 65°, 70°, 75°, 80°, 85°. Alternatively or additionally, the aforesaid acute angle can be in any one of the following ranges: 5° to 85°, 10° to 80°, 15° to 75°, 20° to 70°, 25° to 65°, 30° to 60°, 35° to 55°, 40° to 50°, 5° to 45°, 45° to 85°, 5° to 65°.

In the example of Figs. 11(a) to 11(d), each one of the different engagement portions **340** (i.e. the first engagement portion **340A,** or the second engagement portion **340B,** or the third engagement portion **340C)** can be affixed to the anchor portion **320,** via any one of the respective engagement portion interfaces **420** and the corresponding body interfaces **400.**

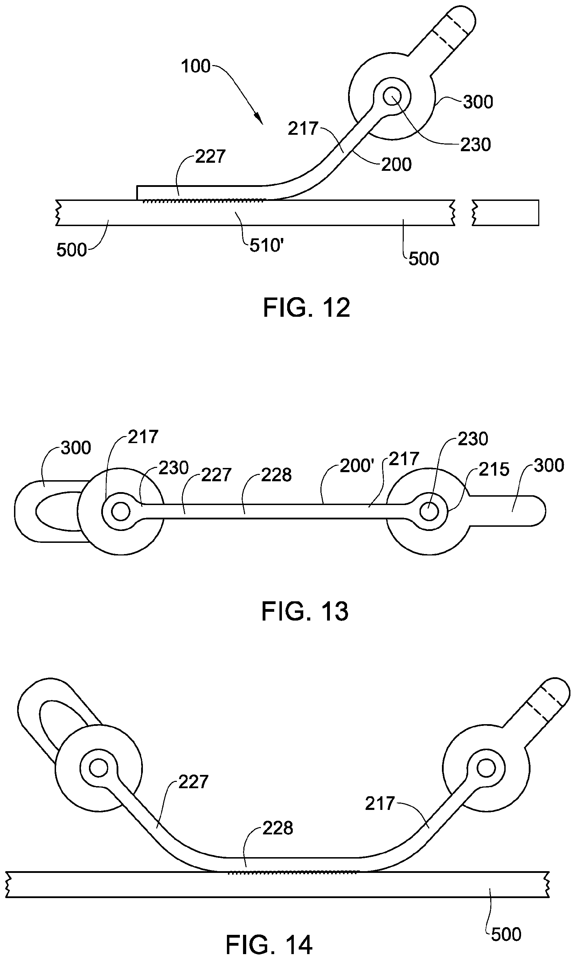

Referring to Fig. 12, in an alternative variation of the above examples, the mounting strip **100** (for example according to any one of the above examples or variations thereof) is not mounted to the panel **500** at an edge thereof, but rather in overlapping relationship with another part of the panel **500** spaced from the edge of the panel **500.** In such a case, the longitudinal second edge portion **227** is affixed to a surface of the panel **500** using any suitable fixing method, for example via mechanical fixing (for example staples, stitching, sewing, etc.) or welding (for example ultrasonic welding, heat welding, etc), or via bonding (for example using suitable adhesives optionally including application of heat and/or pressure, e.g. with contact adhesives). On the other hand, the longitudinal first edge portion **217** is not affixed to the panel **500,** and thus allows flexibility of movement and orientation of the respective engagement elements **300** with respect to the panel **500.**

Referring to Fig. 13, in yet another alternative variation of the above examples, the mounting strip **100** (for example according to any one of the above examples or variations thereof) comprises a first plurality of engagement elements **300** affixed at least to the longitudinal first edge **215,** including at least a part of the first edge portion **217,** in longitudinal serially spaced relationship, i.e., along the longitudinal dimension **L** of the mounting strip **100.** In addition, in the example of Fig. 13, the mounting strip **100** further comprises a second plurality of engagement elements **300** affixed to the longitudinal second edge **225,** including at least part of the second edge portion **227,** in longitudinal serially spaced relationship, i.e., along the longitudinal dimension **L** of the mounting strip **100.** This arrangement leaves a central portion **228** of the strip element **200** free of said engagement elements **300.** The central portion **228** is flanked on either transverse side (longitudinally extending edge) thereof by the longitudinal first edge **215** and longitudinal second edge **225.** Also in this example, each engagement element **300** can be formed as an integral or unitary article (or as a two-component article, for example corresponding to the example of Fig. 11, *mutatis mutandis*) and comprises an anchor portion **320,** and an engagement portion **340** projecting outwardly from the anchor portion **320** in a transverse direction away from the strip element **200.**

In the example of Fig. 13, the strip element **200** comprises at least one cordelle **230** affixed to the strip element **200** at the longitudinal first edge **215,** and at least one cordelle **230** affixed to the strip element **200** at the longitudinal second edge **217.** Each such cordelle **230** is continuous and generally co-extensive with the respective longitudinal first edge **215,** and longitudinal second edge **225.** In alternative variations of this example, one or both such cordelles can be interrupted, and thus there can be one or more first regions of the longitudinal first edge **215** and/or of the longitudinal second edge **225** in which there is no cordelle along the longitudinal first edge **215,** respectively interposed with one or more second regions of the longitudinal first edge **215** and/or of the longitudinal second edge **225** in which there is a cordelle along the longitudinal first edge **215** and/or along the longitudinal second edge **225,** respectively. While in this example the strip element **200** comprises at least one cordelle **230** along each of the longitudinal first edge **215** and the longitudinal second edge **225,** in some alternative variations of this example, the cordelle **230** can be omitted from both or from one of the longitudinal first edge **215** and the longitudinal second edge **225.** Each cordelle **230** is configured for reinforcing the respective longitudinal edge portion, in particular the respective longitudinal edge.

In the example of Fig. 13, and referring also to Fig. 14, the respective mounting strip **100** can be affixed to panel **500** at an edge thereof, or to any other part of the panel **500** spaced from the edge of the panel **500,** and in overlapping relationship therewith. In such cases, the central portion **228** is affixed to a surface of the panel **500** using any suitable fixing method, for example via mechanical fixing (for example staples, stitching, sewing, etc.) or welding (for example ultrasonic welding, heat welding, etc), or via bonding (for example using suitable adhesives optionally including application of heat and/or pressure, e.g. with contact adhesives). On the other hand, the longitudinal first edge portion **217** and the longitudinal second edge portion **227** are not affixed to the panel **500,** and thus allows flexibility of movement and orientation of the respective engagement elements **300** with respect to the panel **500.**

Alternatively, the mounting strip **100** according to the example of Fig. 13, can be used as a stand-alone item, and can be used for example as a multi-use belt or strap, for facilitating mounting multiple items thereto, for example.

It is to be noted that in each of the examples disclosed herein and alternative variations thereof, in particular with reference to Figures 1 to 14, each respective mounting strip can include a plurality of engagement element **300** in which all the engagement element **300** that are affixed to the respective strip element **200** are identical to one-another.

Alternatively, in each of the examples disclosed herein and alternative variations thereof, in particular with reference to Figures 1 to 14, each respective mounting strip can include a plurality of engagement element **300** in which all the engagement element **300** that are affixed to the respective strip element **200** are not all identical to one another, and in fact can include different examples of the engagement element **300** affixed to the respective strip element **200.** For example, one such mounting strip **100** can include one or more engagement elements **300** corresponding to the example of Figs. 4(a) to 4(d), and/or one or more engagement elements **300** corresponding to the example of Figs. 4(a) to 4(d), one or more engagement elements **300** corresponding to the example of Figs. 7(a) to 7(d), one or more engagement elements **300** corresponding to the example of Figs. 8(a) to 8(d), one or more engagement elements **300** corresponding to the example of Figs. 9(a) to 9(d), one or more engagement elements **300** corresponding to the example of Fig. 9(e); one or more engagement elements **300** corresponding to the example of Figs. 10(a) to 10(c), one or more engagement elements **300** corresponding to the example of Fig. 10(d); one or more engagement elements **300** corresponding to the example of Figs. 11(a) to 11(e). As another example, another such mounting strip **100** can include one or more engagement elements **300** corresponding to the example of any one or more of Figs. 11(a) to 11(d), having a variety of engagement portions **340A, 340B** and/or **340C.** Similarly, the respective strip element **200** can correspond to the example of Figs. 1(a) and 1(b) or the example of Figs. 2(a) and 2(b), for example. Furthermore for example, each such mounting strip **100** can include a plurality of engagement elements **300** on one or on both longitudinal edges of the respective strip element **200.**

In at least some examples, the mounting strip **100** can further include one or more engagement elements **300** at one or both longitudinal ends of the respective strip element **200.**

In at least some examples, the mounting strip **100** can further include one or more clasping arrangements at one or both longitudinal ends of the respective strip element **200.**

As is evident from the above disclosure, in at least some examples according to the above aspects of the presently disclosed subject matter, the mounting strip **100** is provided as a stand-along article, different from the panel **500,** itself. This arrangement can allow for a great amount of versatility, particularly in the use of the mounting strip **100** per se, and also in the use of the mounting strip **100** for indirectly providing a panel **500** with engagements elements **300.** For example, any one of a variety of mounting strips **100** (for example each having strip elements **200** of different widths and/or having different types of engagements elements **300)** can be chosen for affixing to any particular configuration or type of panel **500,** and furthermore such affixing can be made easily and in a timely manner. Furthermore, in at least some examples according to the above aspects of the presently disclosed subject matter, the mounting strip **100** can provide further mechanical strength to the panel **500.** Furthermore, in at least some examples according to the above aspects of the presently disclosed subject matter, a damaged mounting strip **100** that is already affixed to a panel **500** can be replaced with another mounting strip **100,** by first removing all or part of the damaged mounting strip **100,** and in at least some such cases this can be achieved without significantly reducing the mechanical integrity of the assembly with the panel **500.**

However, in at least some other examples according to other aspects of the presently disclosed subject matter, the strip element **200** can be in the form of the panel **500** as described in more detail herein, thus the strip element **200** is not different from the panel **500.** In such cases the engagement elements **300** are thus injection molded essentially directly to the respective panel element **500.** However, at least some of the features that arise from having the mounting strip **100** produced as an independent article, separate and different from the panel element **500,** for example as in the examples disclosed above with reference to the attached figures, are not applicable to at least some applications of this other aspect of the presently disclosed subject matter in which strip element **200** is in the form of the panel **500.**

Finally, it should be noted that the word "comprising" as used throughout the appended claims is to be interpreted to mean "including but not limited to".

While there has been shown and disclosed examples in accordance with the presently disclosed subject matter, it will be appreciated that many changes may be made therein without departing from the scope of the presently disclosed subject matter as set out in the claims.

## Claims

1. A structure comprising an assembly, a plurality of mounting points, and at least one connection element (600), wherein:
the assembly includes a panel element (500) and at least one mounting strip (100), wherein the least one mounting strip (100) is affixed with respect to the panel element (500),
the mounting strip (100) comprising a strip element (200) and a plurality of engagement elements (300), each said engagement element (300) including:
an anchor portion (320) configured for anchoring the respective engagement element (300) to the strip element (200); and
an engagement portion (340) including a through-opening wherein said engagement portion (340) includes a loop structure (360) defining said through-opening therein;
wherein at least the anchor portion (320) is provided as an injection molded article, directly molded onto said strip element (200);
wherein the engagement portions (340) of the engagement elements (300) of the assembly are connected to the plurality of mounting points by the at least one connection element (600); and
**characterized in that**
the at least one connection element (600) comprises a cord element threaded in an alternating fashion between the mounting points and the loop structures (360) of the engagement portions (340).

2. The structure according to claim 1, wherein the mounting strip (100) comprises an elongate configuration having a longitudinal dimension at least twice a width dimension thereof.

3. The structure according to any one of claims 1 or 2 wherein the mounting strip (100) is configured for affixing with respect to a panel element (500).

4. The structure according to any one of claims 1 to 3, wherein the mounting strip (100) is configured as a multi-purpose belt or strap, for facilitating mounting multiple items thereto.

5. The structure according to any one of claims 1 to 4, wherein the mounting strip (100) includes one of the following:
- wherein each said engagement element (300) is provided as an injection molded article, directly molded onto said strip element (200);
- wherein each said engagement portion (340) is detachably attachable to a respective one of the anchor portions (320);
- wherein the anchor portion (320) further comprises a body interface (400) and the engagement element (300) further comprises an engagement portion interface (420) configured to interface with and be connected to the body interface (400);
- wherein each said engagement portion (340) is detachably attachable to a respective one of the anchor portions (320), and, wherein the anchor portion (320) further comprises a body interface (400) and the engagement element (300) further comprises an engagement portion interface (420) configured to interface with and be connected to the body interface (400);
- wherein each said engagement portion (340) is detachably attachable to a respective one of the anchor portions (320), and, wherein the anchor portion (320) further comprises a body interface (400) and the engagement element (300) further comprises an engagement portion interface (420) configured to interface with and be connected to the body interface (400), and, wherein the interfacing is via any one or more of a screw and thread arrangement, an adhesive connection between a protrusion and a recess or a snap-fit arrangement.

6. The structure according to any one of claims 1 to 5, wherein the mounting strip (100) includes at least one of the following:
- wherein the strip element (200) comprises a plurality of holes at spaced apart locations along the strip element (200); and wherein the anchor portions (320) are each formed superposed at one of the plurality of holes, having a first anchor portion (320) and second anchor portion (320) arranged above and below the strip element (200) respectively, such that the first and second anchor portions (320) are connected to one another via a connected portion passing through one of the holes;
- wherein the mounting strip (100) comprises at least one cordelle (230) at an edge of the strip element (200), and a slot (330) in each of the anchor portions (320), the slot (330) comprising a circular portion (337) arranged to engage with the cordelle (230).

7. The structure according to any one of claims 1 to 6, wherein the mounting strip (100) includes one of the following:
- wherein said through opening defines a passage axis (PA) different from a longitudinal axis (AA) of the anchor portion (320);
- wherein said through opening defines a passage axis (PA) different from a longitudinal axis (AA) of the anchor portion (320), and, wherein said passage axis (PA) is substantially parallel to said longitudinal axis (AA);
- wherein said through opening defines a passage axis (PA) different from a longitudinal axis (AA) of the anchor portion (320), and, wherein said passage axis (PA) is substantially orthogonal to said longitudinal axis (AA);
- wherein said through opening defines a passage axis (PA) different from a longitudinal axis (AA) of the anchor portion (320), and, wherein said passage axis (PA) is orientated at an acute angle to said longitudinal axis (AA).

8. The structure according to any one of claims 1 to 7, wherein the mounting strip (100) includes one of the following:
- wherein said loop structure (360) is in the form of a body of material at least partially circumscribing and thereby defining the through-opening;
- wherein said loop structure (360) is in the form of a body of material at least partially circumscribing and thereby defining the through-opening, and, wherein the body of material comprises at least one partial ring-shaped structure having an opening (370) in the ring structure, the opening (370) being a gap either at a central portion (360d) of the ring distal from the anchoring portion, or at a side portion of the ring between the central portion and the anchoring portion;
- wherein said loop structure (360) is in the form of a body of material at least partially circumscribing and thereby defining the through-opening, and, wherein the body of material comprises at least one partial ring-shaped structure having an opening (370) in the ring structure, the opening (370) being a gap either at a central portion (360d) of the ring distal from the anchoring portion, or at a side portion of the ring between the central portion and the anchoring portion, and, wherein the relative sizes of the gap and the through-opening are such as to allow the loop-structure to engage with a cable passing through the through-opening, and to allow the loop-structure to become disconnected from the cable via the gap under loads above a pre-determined threshold.

9. The structure according to claim 1:
- wherein a transverse cross-sectional area of the through-opening is configured to be larger than a transverse cross-sectional area of a connection element (600) configured to be passed therethrough;
- wherein said loop structure (360) is in the form of a body of material fully circumscribing and defining the through-opening; wherein a first part of the loop structure (360) is defined by the base element (326), while a second part of the loop structure (360) is defined by a C-shaped element joined to the base element (326); and wherein the through-opening is configured to allow passage of a connection element (600) through the loop structure (360) along a passage axis (PA).

10. The structure according to any one of claims 1 to 9, including at least one of the following:
- the mounting strip (100) comprising the engagement elements (300) arranged on a first edge portion (217) of the strip element (200), and wherein optionally the mounting strip (100) comprises two layers (200A;200B) joined together at the first edge portion (217) and, when not connected to a panel (500), separated at a second edge portion (227) of the strip element (200);
- wherein the engagement elements (300) are a first set of engagement elements (300), the mounting strip (100) further comprising a second set of engagement elements (300) arranged on a second edge portion (227) of the strip element (200), the second edge portion (227) being located at an edge of the strip opposite from that at which the first edge portion (217) is located.

11. The structure according to any one of claims 1 to 10, wherein the assembly includes at least one of the following:
- wherein the mounting strip (100) is affixed at a second edge portion (227) thereof to the panel element (500);
- wherein the mounting strip (100) further comprises a central portion free of said engagement elements (300), wherein the mounting strip (100) is affixed at the central portion thereof to the panel element (500);
- wherein the mounting strip (100) is affixed to an edge of the panel element (500), or to a portion of the panel element (500) spaced from an edge thereof;
- wherein the mounting strip (100) is affixed to an edge of the panel element (500), or to a portion of the panel element (500) spaced from an edge thereof, and, wherein the mounting strip (100) is affixed to an edge of the panel element (500), the edge of the panel element (500) being affixed in-between the two layers (200A; 200B) of the mounting strip (100) at the second edge portion (227) thereof;
- wherein affixing comprises at least one of sewing, stapling welding, melting or adhering;
- wherein the panel element (500) comprises at least one further said mounting strip (100) affixed thereto.

12. A method of providing a structure, the structure comprising an assembly, a plurality of mounting points, and at least one connection element (600), the method comprising:
providing the assembly, the assembly including a panel element (500) and at least one mounting strip (100), wherein the least one mounting strip (100) is affixed with respect to the panel element (500), the mounting strip (100) comprising a strip element (200) and a plurality of engagement elements (300), each said engagement element (300) including:
an anchor portion (320) configured for anchoring the respective engagement element (300) to the strip element (200); and
an engagement portion (340) including a through-opening;
wherein at least the anchor portion (320) is provided as an injection molded article, directly molded onto said strip element (200); and
connecting the engagement portions (340) of the engagement elements (300) of the assembly to said plurality of mounting points using said at least one connection element (600) by threading the at least one connection element (600) in an alternating fashion between the mounting points and the loop structures (360) of the engagement portions (340), wherein the at least one connection element (600) comprises a cord element.

## Patentansprüche

1. Struktur, umfassend eine Baugruppe, eine Vielzahl von Befestigungspunkten und mindestens ein Verbindungselement (600), wobei:
die Baugruppe ein Plattenelement (500) und mindestens einen Befestigungsstreifen (100) beinhaltet, wobei der mindestens eine Befestigungsstreifen (100) in Bezug auf das Plattenelement (500) angebracht ist,
wobei der Befestigungsstreifen (100) ein Streifenelement (200) und eine Vielzahl von Eingriffselementen (300) umfasst, wobei jedes Eingriffselement (300) beinhaltet:
einen Ankerabschnitt (320), der zum Verankern des jeweiligen Eingriffselements (300) an dem Streifenelement (200) konfiguriert ist; und
einen Eingriffsabschnitt (340), der eine Durchgangsöffnung beinhaltet, wobei der Eingriffsabschnitt (340) eine Schleifenstruktur (360) beinhaltet, die die Durchgangsöffnung darin definiert;
wobei mindestens der Ankerabschnitt (320) als ein spritzgegossener Artikel bereitgestellt wird, der direkt auf das Streifenelement (200) geformt wird;
wobei die Eingriffsabschnitte (340) der Eingriffselemente (300) der Baugruppe durch das mindestens eine Verbindungselement (600) mit der Vielzahl von Befestigungspunkten verbunden sind; und
**dadurch gekennzeichnet, dass**
das mindestens eine Verbindungselement (600) ein Schnurelement umfasst, das abwechselnd zwischen den Befestigungspunkten und den Schleifenstrukturen (360) der Eingriffsabschnitte (340) eingefädelt ist.

2. Struktur nach Anspruch 1, wobei der Befestigungsstreifen (100) eine längliche Konfiguration mit einer Längsabmessung umfasst, die mindestens doppelt so groß ist wie seine Breitenabmessung.

3. Struktur nach einem der Ansprüche 1 oder 2, wobei der Befestigungsstreifen (100) zum Anbringen in Bezug auf ein Plattenelement (500) konfiguriert ist.

4. Struktur nach einem der Ansprüche 1 bis 3, wobei der Befestigungsstreifen (100) als Mehrzweckriemen oder -band zum Erleichtern des Befestigens mehrerer Gegenstände daran konfiguriert ist.

5. Struktur nach einem der Ansprüche 1 bis 4, wobei der Befestigungsstreifen (100) eines der folgenden beinhaltet:
- wobei jedes Eingriffselement (300) als ein spritzgegossener Artikel bereitgestellt wird, der direkt auf das Streifenelement (200) geformt wird;
- wobei jeder Eingriffsabschnitt (340) abnehmbar an einem entsprechenden der Ankerabschnitte (320) anbringbar ist;
- wobei der Ankerabschnitt (320) ferner eine Körper-Schnittstelle (400) umfasst und das Eingriffselement (300) ferner eine Eingriffsabschnitt-Schnittstelle (420) umfasst, die konfiguriert ist, um mit der Körper-Schnittstelle (400) zu interagieren und mit dieser verbunden zu werden;
- wobei jeder Eingriffsabschnitt (340) abnehmbar an einem jeweiligen der Ankerabschnitte (320) anbringbar ist und wobei der Ankerabschnitt (320) ferner eine Körper-Schnittstelle (400) umfasst und das Eingriffselement (300) ferner eine Eingriffsabschnitt-Schnittstelle (420) umfasst, die konfiguriert ist, um mit der Körper-Schnittstelle (400) zu interagieren und mit dieser verbunden zu werden;
- wobei jeder Eingriffsabschnitt (340) abnehmbar an einem jeweiligen der Ankerabschnitte (320) anbringbar ist und wobei der Ankerabschnitt (320) ferner eine Körper-Schnittstelle (400) umfasst und das Eingriffselement (300) ferner eine Eingriffsabschnitt-Schnittstelle (420) umfasst, die konfiguriert ist, um mit der Körper-Schnittstelle (400) zu interagieren und mit dieser verbunden zu werden, und wobei die Anbindung über eine oder mehrere Schraub- und Gewindeanordnungen, eine Klebverbindung zwischen einem Vorsprung und einer Aussparung oder eine Schnappverbindung erfolgt.

6. Struktur nach einem der Ansprüche 1 bis 5, wobei der Befestigungsstreifen (100) mindestens eines der folgenden beinhaltet:
- wobei das Streifenelement (200) eine Vielzahl von Löchern an beabstandeten getrennten Stellen entlang des Streifenelements (200) umfasst; und wobei die Ankerabschnitte (320) jeweils übereinander an einem der Vielzahl von Löchern gebildet sind, die einen ersten Ankerabschnitt (320) und einen zweiten Ankerabschnitt (320) aufweisen, die über bzw. unter dem Streifenelement (200) angeordnet sind, so dass der erste und der zweite Ankerabschnitt (320) über einen Verbindungsabschnitt miteinander verbunden sind, der durch eines der Löcher hindurchgeht;
- wobei der Befestigungsstreifen (100) mindestens eine Schnur (230) an einer Kante des Streifenelements (200) und einen Schlitz (330) in jedem der Ankerabschnitte (320) umfasst, wobei der Schlitz (330) einen kreisförmigen Abschnitt (337) umfasst, der angeordnet ist, um mit der Schnur (230) in Eingriff zu stehen.

7. Struktur nach einem der Ansprüche 1 bis 6, wobei der Befestigungsstreifen (100) eines der folgenden beinhaltet:
- wobei die Durchgangsöffnung eine Durchgangsachse (PA) definiert, die sich von einer Längsachse (AA) des Ankerabschnitts (320) unterscheidet;
- wobei die Durchgangsöffnung eine Durchgangsachse (PA) definiert, die sich von einer Längsachse (AA) des Ankerabschnitts (320) unterscheidet, und wobei die Durchgangsachse (PA) im Wesentlichen parallel zur Längsachse (AA) ist;
- wobei die Durchgangsöffnung eine Durchgangsachse (PA) definiert, die sich von einer Längsachse (AA) des Ankerabschnitts (320) unterscheidet, und wobei die Durchgangsachse (PA) im Wesentlichen orthogonal zur Längsachse (AA) ist;
- wobei die Durchgangsöffnung eine Durchgangsachse (PA) definiert, die sich von einer Längsachse (AA) des Ankerabschnitts (320) unterscheidet, und wobei die Durchgangsachse (PA) in einem spitzen Winkel zur Längsachse (AA) ausgerichtet ist.

8. Struktur nach einem der Ansprüche 1 bis 7, wobei der Befestigungsstreifen (100) eines der folgenden beinhaltet:
- wobei die Schleifenstruktur (360) in Form eines Körpers aus Material vorliegt, der die Durchgangsöffnung mindestens teilweise umgibt und dadurch definiert;
- wobei die Schleifenstruktur (360) in Form eines Körpers aus Material vorliegt, der die Durchgangsöffnung mindestens teilweise umgibt und dadurch definiert, und wobei der Körper aus Material mindestens eine teilweise ringförmige Struktur umfasst, die eine Öffnung (370) in der Ringstruktur aufweist, wobei die Öffnung (370) ein Spalt entweder an einem zentralen Abschnitt (360d) des Rings distal von dem Ankerabschnitt oder an einem Seitenabschnitt des Rings zwischen dem zentralen Abschnitt und dem Ankerabschnitt ist;
- wobei die Schleifenstruktur (360) in Form eines Körpers aus Material vorliegt, der die Durchgangsöffnung mindestens teilweise umgibt und dadurch definiert, und wobei der Körper aus Material mindestens eine teilweise ringförmige Struktur umfasst, die eine Öffnung (370) in der Ringstruktur aufweist, wobei die Öffnung (370) ein Spalt entweder an einem zentralen Abschnitt (360d) des Rings distal vom Ankerabschnitt oder an einem Seitenabschnitt des Rings zwischen dem zentralen Abschnitt und dem Ankerabschnitt ist, und wobei die relativen Größen des Spalts und der Durchgangsöffnung so sind, dass sie der Schleifenstruktur ermöglichen, mit einem Kabel in Eingriff zu stehen, das durch die Durchgangsöffnung hindurchgeht, und dass sie der Schleifenstruktur ermöglichen, über den Spalt von dem Kabel unter Lasten über einem vorbestimmten Schwellenwert getrennt zu werden.

9. Struktur nach Anspruch 1:
- wobei ein querverlaufender Querschnittsbereich der Durchgangsöffnung konfiguriert ist, um größer zu sein als ein querverlaufender Querschnittsbereich eines Verbindungselements (600), das konfiguriert ist, um dort hindurchgehen zu können;
- wobei die Schleifenstruktur (360) in Form eines Körpers aus Material vorliegt, der die Durchgangsöffnung vollständig umgibt und definiert; wobei ein erster Teil der Schleifenstruktur (360) durch das Basiselement (326) definiert ist, während ein zweiter Teil der Schleifenstruktur (360) durch ein C-förmiges Element definiert ist, das an das Basiselement (326) angeschlossen ist; und wobei die Durchgangsöffnung konfiguriert ist, um den Durchgang eines Verbindungselements (600) durch die Schleifenstruktur (360) entlang einer Durchgangsachse (PA) zu ermöglichen.

10. Struktur nach einem der Ansprüche 1 bis 9, die mindestens eines der folgenden beinhaltet:
- den Befestigungsstreifen (100), umfassend die Eingriffselemente (300), die an einem ersten Randabschnitt (217) des Streifenelements (200) angeordnet sind, und wobei optional der Befestigungsstreifen (100) zwei Schichten (200A; 200B) umfasst, die an den ersten Randabschnitt (217) zusammen angeschlossen sind und, wenn sie nicht mit einer Platte (500) verbunden sind, an einem zweiten Randabschnitt (227) des Streifenelements (200) getrennt sind;
- wobei die Eingriffselemente (300) ein erster Satz von Eingriffselementen (300) sind, der Befestigungsstreifen (100) ferner einen zweiten Satz von Eingriffselementen (300) umfasst, die an einem zweiten Randabschnitt (227) des Streifenelements (200) angeordnet sind, wobei sich der zweite Randabschnitt (227) an einem Rand des Streifens befindet, der gegenüber von dem ist, an dem sich der erste Randabschnitt (217) befindet.

11. Struktur nach einem der Ansprüche 1 bis 10, wobei die Baugruppe mindestens eines der folgenden beinhaltet:
- wobei der Befestigungsstreifen (100) an einem zweiten Randabschnitt (227) davon an dem Plattenelement (500) angebracht ist;
- wobei der Befestigungsstreifen (100) ferner einen zentralen Abschnitt umfasst, der frei von den Eingriffselementen (300) ist, wobei der Befestigungsstreifen (100) an dem zentralen Abschnitt davon an dem Plattenelement (500) angebracht ist;
- wobei der Befestigungsstreifen (100) an einem Rand des Plattenelements (500) oder an einem Abschnitt des Plattenelements (500) angebracht ist, der von einem Rand davon beabstandet ist;
- wobei der Befestigungsstreifen (100) an einem Rand des Plattenelements (500) oder an einem Abschnitt des Plattenelements (500), der von einem Rand davon beabstandet ist, angebracht ist, und wobei der Befestigungsstreifen (100) an einem Rand des Plattenelements (500) angebracht ist, wobei der Rand des Plattenelements (500) zwischen den zwei Schichten (200A; 200B) des Befestigungsstreifens (100) an dessen zweitem Randabschnitt (227) angebracht ist;
- wobei das Anbringen mindestens eines von Nähen, Klammern, Heftschweißen, Schmelzen oder Kleben umfasst;
- wobei das Plattenelement (500) mindestens einen weiteren Befestigungsstreifen (100) umfasst, der daran angebracht ist.

12. Verfahren zum Bereitstellen einer Struktur, wobei die Struktur eine Baugruppe, eine Vielzahl von Befestigungspunkten und mindestens ein Verbindungselement (600) umfasst, wobei das Verfahren umfasst:
Bereitstellen der Baugruppe, wobei die Baugruppe ein Plattenelement (500) und mindestens einen Befestigungsstreifen (100) beinhaltet, wobei der mindestens eine Befestigungsstreifen (100) in Bezug auf das Plattenelement (500) angebracht ist, wobei der Befestigungsstreifen (100) ein Streifenelement (200) und eine Vielzahl von Eingriffselementen (300) umfasst, wobei jedes Eingriffselement (300) beinhaltet:
einen Ankerabschnitt (320), der zum Verankern des jeweiligen Eingriffselements (300) an dem Streifenelement (200) konfiguriert ist; und
einen Eingriffsabschnitt (340), der eine Durchgangsöffnung beinhaltet;
wobei mindestens der Ankerabschnitt (320) als ein spritzgegossener Artikel bereitgestellt wird, der direkt auf das Streifenelement (200) geformt wird; und
Verbinden der Eingriffsabschnitte (340) der Eingriffselemente (300) der Baugruppe mit der Vielzahl von Befestigungspunkten mittels des mindestens einen Verbindungselements (600) durch Einfädeln des mindestens einen Verbindungselements (600) in abwechselnder Weise zwischen den Befestigungspunkten und den Schleifenstrukturen (360) der Eingriffsabschnitte (340), wobei das mindestens eine Verbindungselement (600) ein Schnurelement umfasst.

## Revendications

1. Structure comprenant un assemblage, une pluralité de points de montage et au moins un élément de connexion (600), dans laquelle :
l'assemblage inclut un élément de panneau (500) et au moins une bande de montage (100), dans laquelle l'au moins une bande de montage (100) est fixée par rapport à l'élément de panneau (500),
la bande de montage (100) comprenant un élément de bande (200) et une pluralité d'éléments d'engagement (300), chaque dit élément d'engagement (300) incluant :
une partie d'ancrage (320) configurée pour ancrer l'élément d'engagement (300) respectif à l'élément de bande (200) ; et
une partie d'engagement (340) incluant une ouverture traversante dans laquelle ladite partie d'engagement (340) inclut une structure en boucle (360) définissant ladite ouverture traversante à l'intérieur de celle-ci ;
dans laquelle au moins la partie d'ancrage (320) est prévue en tant qu'un article moulé par injection, directement moulé sur ledit élément de bande (200) ;
dans laquelle les parties d'engagement (340) des éléments d'engagement (300) de l'assemblage sont connectées à la pluralité de points de montage par l'au moins un élément de connexion (600) ; et
**caractérisée en ce que**
l'au moins un élément de connexion (600) comprend un élément de cordon enfilé de manière alternée entre les points de montage et les structures en boucle (360) des parties d'engagement (340).

2. Structure selon la revendication 1, dans laquelle la bande de montage (100) comprend une configuration allongée ayant une dimension longitudinale d'au moins deux fois la dimension de largeur de celle-ci.

3. Structure selon l'une quelconque des revendications 1 ou 2, dans laquelle la bande de montage (100) est configurée pour être fixée par rapport à un élément de panneau (500).

4. Structure selon l'une quelconque des revendications 1 à 3, dans laquelle la bande de montage (100) est configurée en tant qu'une ceinture ou une sangle multi-usage, pour faciliter le montage de plusieurs objets sur celle-ci.

5. Structure selon l'une quelconque des revendications 1 à 4, dans laquelle la bande de montage (100) inclut l'un des points suivants :
- dans laquelle chaque dit élément d'engagement (300) est prévu en tant qu'un article moulé par injection, directement moulé sur ledit élément de bande (200) ;
- dans laquelle chaque dite partie d'engagement (340) est attachable de manière amovible à l'une respective des parties d'ancrage (320) ;
- dans laquelle la partie d'ancrage (320) comprend en outre une interface de corps (400) et l'élément d'engagement (300) comprend en outre une interface de partie d'engagement (420) configurée pour s'interfacer et être connectée à l'interface de corps (400) ;
- dans laquelle chaque dite partie d'engagement (340) est attachable de manière amovible à l'une respective des parties d'ancrage (320), et, dans laquelle la partie d'ancrage (320) comprend en outre une interface de corps (400) et l'élément d'engagement (300) comprend en outre une interface de partie d'engagement (420) configurée pour s'interfacer et être connectée à l'interface de corps (400) ;
- dans laquelle chaque dite partie d'engagement (340) est attachable de manière amovible à l'une respective des parties d'ancrage (320), et, dans laquelle la partie d'ancrage (320) comprend en outre une interface de corps (400) et l'élément d'engagement (300) comprend en outre une interface de partie d'engagement (420) configurée pour s'interfacer et être connectée à l'interface de corps (400), et, dans laquelle l'interfaçage se fait via un ou plusieurs parmi un agencement de vis et de filetages, une connexion adhésive entre une protubérance et un renfoncement ou un agencement snap-fit.

6. Structure selon l'une quelconque des revendications 1 à 5, dans laquelle la bande de montage (100) inclut au moins l'un des points suivants :
- dans laquelle l'élément de bande (200) comprend une pluralité de trous à des emplacements espacés le long de l'élément de bande (200) ; et dans laquelle les parties d'ancrage (320) sont chacune formées superposées à l'un de la pluralité de trous, ayant une première partie d'ancrage (320) et une deuxième partie d'ancrage (320) disposées respectivement au-dessus et au-dessous de l'élément de bande (200), de sorte que la première et la deuxième partie d'ancrage (320) sont connectées l'une à l'autre via une partie connectée passant à travers l'un des trous ;
- dans laquelle la bande de montage (100) comprend au moins une cordelle (230) sur un bord de l'élément de bande (200), et une fente (330) dans chacune des parties d'ancrage (320), la fente (330) comprenant une partie circulaire (337) disposée pour s'engager dans la cordelle (230).

7. Structure selon l'une quelconque des revendications 1 à 6, dans laquelle la bande de montage (100) inclut l'un des points suivants :
- dans laquelle ladite ouverture traversante définit un axe de passage (PA) différent d'un axe longitudinal (AA) de la partie d'ancrage (320) ;
- dans laquelle ladite ouverture traversante définit un axe de passage (PA) différent d'un axe longitudinal (AA) de la partie d'ancrage (320), et, dans laquelle ledit axe de passage (PA) est essentiellement parallèle audit axe longitudinal (AA) ;
- dans laquelle ladite ouverture traversante définit un axe de passage (PA) différent d'un axe longitudinal (AA) de la partie d'ancrage (320), et, dans laquelle ledit axe de passage (PA) est essentiellement orthogonal audit axe longitudinal (AA) ;
- dans laquelle ladite ouverture traversante définit un axe de passage (PA) différent d'un axe longitudinal (AA) de la partie d'ancrage (320), et, dans laquelle ledit axe de passage (PA) est orienté selon un angle aigu par rapport audit axe longitudinal (AA).

8. Structure selon l'une quelconque des revendications 1 à 7, dans laquelle la bande de montage (100) inclut l'un des points suivants :
- dans laquelle ladite structure en boucle (360) est sous la forme d'un corps de matériau entourant au moins partiellement et définissant de ce fait l'ouverture traversante ;
- dans laquelle ladite structure en boucle (360) est sous la forme d'un corps de matériau entourant au moins partiellement et définissant de ce fait l'ouverture traversante, et dans laquelle le corps de matériau comprend au moins une structure partielle en forme d'anneau ayant une ouverture (370) dans la structure en anneau, l'ouverture (370) étant un espace soit au niveau d'une partie centrale (360d) de l'anneau distale de la partie d'ancrage, soit au niveau d'une partie latérale de l'anneau entre la partie centrale et la partie d'ancrage ;
- dans laquelle ladite structure en boucle (360) est sous la forme d'un corps de matériau entourant au moins partiellement et définissant de ce fait l'ouverture traversante, et dans laquelle le corps de matériau comprend au moins une structure partielle en forme d'anneau ayant une ouverture (370) dans la structure en anneau, l'ouverture (370) étant un espace soit au niveau d'une partie centrale (360d) de l'anneau distale de la partie d'ancrage, soit au niveau d'une partie latérale de l'anneau entre la partie centrale et la partie d'ancrage, et, dans laquelle les tailles relatives de l'espace et de l'ouverture traversante sont telles qu'elles permettent à la structure en boucle de s'engager avec un câble passant par l'ouverture traversante, et permettent à la structure en boucle de se déconnecter du câble via l'espace sous des charges supérieures à un seuil prédéterminé.

9. Structure selon la revendication 1 :
- dans laquelle une section transversale de l'ouverture traversante est configurée pour être plus grande qu'une section transversale d'un élément de connexion (600) configuré pour passer à travers celle-ci ;
- dans laquelle ladite structure en boucle (360) est sous la forme d'un corps de matériau entourant entièrement et définissant l'ouverture traversante ; dans laquelle une première part de la structure en boucle (360) est définie par l'élément de base (326), tandis qu'une deuxième part de la structure en boucle (360) est définie par un élément en forme de C assemblé à l'élément de base (326) ; et dans laquelle l'ouverture traversante est configurée pour permettre le passage d'un élément de connexion (600) à travers la structure en boucle (360) le long d'un axe de passage (PA).

10. Structure selon l'une quelconque des revendications 1 à 9, incluant au moins l'un des points suivants :
- la bande de montage (100) comprenant les éléments d'engagement (300) disposés sur une première partie de bord (217) de l'élément de bande (200), et dans laquelle la bande de montage (100) comprend optionnellement deux couches (200A; 200B) assemblées au niveau de la première partie de bord (217) et, lorsqu'elles ne sont pas connectées à un panneau (500), séparées au niveau d'une deuxième partie de bord (227) de l'élément de bande (200) ;
- dans laquelle les éléments d'engagement (300) sont un premier ensemble d'éléments d'engagement (300), la bande de montage (100) comprenant en outre un deuxième ensemble d'éléments d'engagement (300) disposés sur une deuxième partie de bord (227) de l'élément de bande (200), la deuxième partie de bord (227) étant située au niveau d'un bord de la bande opposé à celui au niveau duquel est située la première partie de bord (217).

11. Structure selon l'une quelconque des revendications 1 à 10, dans laquelle l'assemblage inclut au moins l'un des points suivants :
- dans laquelle la bande de montage (100) est fixée au niveau d'une deuxième partie de bord (227) de celle-ci à l'élément de panneau (500) ;
- dans laquelle la bande de montage (100) comprend en outre une partie centrale libre desdits éléments d'engagement (300), dans laquelle la bande de montage (100) est fixée au niveau de la partie centrale de celle-ci à l'élément de panneau (500) ;
- dans laquelle la bande de montage (100) est fixée à un bord de l'élément de panneau (500), ou à une partie de l'élément de panneau (500) espacée d'un bord de celui-ci ;
- dans laquelle la bande de montage (100) est fixée à un bord de l'élément de panneau (500), ou à une partie de l'élément de panneau (500) espacée d'un bord de celui-ci, et, dans laquelle la bande de montage (100) est fixée à un bord de l'élément de panneau (500), le bord de l'élément de panneau (500) étant fixé entre les deux couches (200A ; 200B) de la bande de montage (100) au niveau de la deuxième partie de bord (227) de celle-ci ;
- dans laquelle la fixation comprend au moins l'un parmi la couture, l'agrafage, le soudage, la fonte ou l'adhérence ;
- dans laquelle l'élément de panneau (500) comprend au moins une autre dite bande de montage (100) fixée à celui-ci.

12. Procédé de provision d'une structure, la structure comprenant un assemblage, une pluralité de points de montage, et au moins un élément de connexion (600), le procédé comprenant :
la provision de l'assemblage, l'assemblage incluant un élément de panneau (500) et au moins une bande de montage (100), dans lequel l'au moins une bande de montage (100) est fixée par rapport à l'élément de panneau (500), la bande de montage (100) comprenant un élément de bande (200) et une pluralité d'éléments d'engagement (300), chaque dit élément d'engagement (300) incluant :
une partie d'ancrage (320) configurée pour ancrer l'élément d'engagement (300) respectif à l'élément de bande (200) ; et
une partie d'engagement (340) incluant une ouverture traversante ;
dans lequel au moins la partie d'ancrage (320) est prévue en tant qu'un article moulé par injection, directement moulé sur ledit élément de bande (200) ; et
la connexion des parties d'engagement (340) des éléments d'engagement (300) de l'assemblage à ladite pluralité de points de montage à l'aide dudit au moins un élément de connexion (600) en enfilant l'au moins un élément de connexion (600) de manière alternée entre les points de montage et les structures en boucle (360) des parties d'engagement (340), dans lequel l'au moins un élément de connexion (600) comprend un élément de cordon.
